# EUROPEAN PATENT SPECIFICATION

(11) **EP 4 556 941 B1**
(45) Date of publication and mention of the grant of the patent: **28.10.2026**
(21) Application number: 23825186.2
(22) Date of filing: 29.06.2023
(51) Int. Cl.: G01S 7/282, G01S 7/35, G01S 13/44, G01S 13/58, G01S 13/72, G01S 13/32, G01S 13/34, G01S 13/931, G06F 17/14, G01S 13/88

(54) **SIGNAL PROCESSING METHOD AND APPARATUS, AND RADAR, MEDIUM, PROGRAM PRODUCT AND TERMINAL**
SIGNALVERARBEITUNGSVERFAHREN UND -VORRICHTUNG SOWIE RADAR, MEDIUM, PROGRAMMPRODUKT UND ENDGERÄT
PROCÉDÉ ET APPAREIL DE TRAITEMENT DU SIGNAL, ET RADAR, SUPPORT, PRODUIT PROGRAMME ET TERMINAL

(30) Priority: 11.07.2022 CN 202210813029; 08.06.2023 CN 202310682168
(43) Date of publication of application: 21.05.2025
(73) Proprietor: Calterah Semiconductor Technology (Shanghai) Co., Ltd., Shanghai 201210 (CN)
(72) Inventor: ZHANG, Lei, Shanghai 201210 (CN); CHEN, Yi, Shanghai 201210 (CN); WANG, Xiao, Shanghai 201210 (CN); DAI, Lanfeng, Shanghai 201210 (CN); CHENG, Yige, Shanghai 201210 (CN); YU, Zengyu, Shanghai 201210 (CN); MA, Yi, Shanghai 201210 (CN); ZHU, Tongyu, Shanghai 201210 (CN)
(74) Representative: Balder IP Law, S.L.
(86) International application number: PCT/CN2023/104114
(87) International publication number: WO 2024/012228

(56) References cited:
- EP-A1- 4 184 797
- WO-A1-2021/243491
- WO-A1-2022/051992
- CN-A- 109 917 340
- CN-A- 110 133 630
- CN-A- 111 257 846
- CN-A- 112 740 069
- CN-A- 112 740 069
- CN-A- 113 109 785
- US-A1- 2020 150 260
- US-A1- 2023 092 131

## Description

### TECHNICAL FIELD

The various embodiments described in this document relate in general to the technical field of radar, and more specifically to a signal processing method, a signal processing device, a radar, a readable storage medium, a computer program product and a terminal.

### BACKGROUND

An angle resolution, an angle accuracy and an angle robustness index of a radar are directly related to the number of receive channels and an aperture of the radar. Due to the limitation of a radar size and the number of physical transmit/receive channels of a millimeter wave radar chip, a multiple-input multiple-output (MIMO) radar is generally used to extend the number of the receive channels and the aperture.

Signal processing methods of the MIMO radar include a time-division-multiplexing (TDM)-based signal processing method, a Doppler-division-multiplexing (DDM)-based signal processing method, etc. from a perspective that transmitted detection signals are different.

However, currently, the signal processing methods of the MIMO radar achieved based on various multiplexing have their own drawbacks and cannot well meet radar measurement requirements.

D1 (WO2021/243491A1) discloses a radar signal transmitting method including: sending a first signal and a second signal in S slots, where a phase of the first signal remains unchanged in the S slots, and the first signal may be equivalent to a SIMO signal; and sending the second signal in at least one of a time division manner or a code division manner.

D2 (WO2022/051992A1) discloses an echo signal-based speed measurement method comprising obtaining echo signals for a detection target, the echo signals comprising a first echo signal and a second echo signal and determining detection point information of the first echo signal; selecting at least part of a Doppler spectrum from a Doppler spectrum of the second echo signal as a query spectrum.

D3 (CN112740069A) provides a signal processing method including: obtaining Nr1×M1 signals; obtaining Nt×Nr2×M2 signals; performing first signal processing on the Nr1×M1 signals to obtain first processing data, where the first signal processing includes sequentially performing range FFT analysis, linear prediction, and Doppler FFT analysis; performing second signal processing on the Nt×Nr2×M2 signals to obtain second processing data; and performing velocity matching ambiguity resolution processing based on the first processing data and the second processing data.

### SUMMARY

The invention is set out in the appended set of claims.

Embodiments of the present disclosure provide a signal processing method, a signal processing device, a radar, a readable storage medium, a computer program product and a terminal, which are advantageous to better meet radar measurement requirements.

The claimed embodiments of the present disclosure provide a signal processing method, applied to a radar. The radar includes M transmit channels. The method includes: transmitting, during a first transmit cycle, a first detection signal through the M transmit channels, wherein the first detection signal is an equally spaced Doppler-division-multiplexing signal; transmitting, during a second transmit cycle that is different fromt he first transmit cycle, a second detection signal through m1 transmit channels in the M transmit channels, where 1≤m1<M and M is an integer greater than 1; the second detection signal is a time-division-multiplexing signal; and processing a first echo signal and a second echo signal to determine a correspondence between the first echo signal and the M transmit channels; where the first echo signal and the second echo signal are signals generated after the first detection signal and the second detection signal being reflected by a target, respectively.

In the claimed embodiments, transmitting the first detection signal through the M transmit channels includes: transmitting the first detection signal with pulses phase-stepped by $\left(e-1\right) * \frac{2 ∗ π}{M}$ through an eth transmit channel in the M transmit channels, where e∈{1, 2, 3, ..., M}.

In some embodiments, processing the first echo signal and the second echo signal to determine the correspondence between the first echo signal and the M transmit channels includes: performing a first processing on the first echo signal to obtain a first target data, performing a second processing on the second echo signal to obtain a second target data, performing a matching processing on the first target data and the second target data, and determining the correspondence between the first echo signal and the M transmit channels based on a matching result.

In some embodiments, the first target data includes I*_{AMT}* target point data *T_{AMT}*(*i*) and the second target data includes J_{*Am*1*T*} target point data *T_{Am1T}*(*j*), where *i* ∈ {1*,* ..., I*_{AMT}*}, *j* ∈ {1*,* ..., J_{*Am*1*T*}}, and both I*_{AMT}* and J*_{Am1T}* are positive integers. Performing the matching processing on the first target data and the second target data includes: for each of the J_{*Am*1*T*} target point data *T*_{*Am*1*T*}(*j*)*,* searching for a corresponding target point data among the I*_{AMT}* target point data *T_{AMT}*(*i*)*.*

In some embodiments, the target point data *T_{AMT}*(*i*) includes a range unit data *k_{AMT}*(*i*) and a velocity unit data *P_{AMT}*(*i*) corresponding to the target, and the target point data *T_{Am1T}*(*j*) includes a range unit data *k_{Am1T}*(*j*) and a velocity unit data *p_{Am1T}*(*j*) corresponding to the target. Searching for the respective one of the target point data *T_{AMT}*(*i*) corresponding to each of the target point data *T_{Am1T}*(*j*) among I*_{AMT}* of the target point data *T_{AMT}*(*i*) respectively, includes: determining a first weight value *W_{R}*(*i, j, q),* a second weight value *W_{V}*(*i, j, q)* and a third weight value *W_{RV}*(*i, j, q*) according to the following formulas, respectively: *W_{R}* (*i, j, q*) *=* |*k_{AMT}*(*i*) *- k*_{*Am*1*T*}(*j*)|*,* ${W}_{V} \left(i, j, q\right) = \left|\left({P}_{AMT}\left(i\right)+q\frac{{p}_{A}}{M}\right)-{p}_{Am 1 T}\left(j\right)\right|$, *W_{RV}*(*i, j, q*) *=* ∂ · *W_{R}*(*i, j, q*) *+ β* · *W_{V}*(*i, j, q*), where ∂ and *β* are predetermined coefficients corresponding to the first weight value *W_{R}*(*i, j, q*) and the second weight value *W_{V}*(*i, j, q*) respectively, *p_{A}* is a number of FFT points in a velocity gate, and q denotes a qth transmit channel corresponding to the target point data *T_{AMT}*(*i*) to which the range unit data *k*_{*A*M*T*}(*i*) and the velocity unit data *P_{AMT}*(*i*) belong, among the M transmit channels. The first weight value *W_{R}*(*i, j, q*)*,* the second weight value *W_{V}*(*i, j, q*) and the third weight value *W_{RV}*(*i, j, q*) correspond to predetermined decision thresholds *TH_{R}*, *TH_{V}*, *Wₘᵢₙ*(*i*) respectively, and whether the target point data *T*_{*A*M*T*}(*i*) matches with the target point data *T*_{*Am*1*T*}(*j*) is determined according to the following conditions: *W_{R}*(*i, j, q*)<*TH_{R} , W_{V}*(*i, j, q*)*<TH_{V}* , *W_{RV}*(*i, j, q*)*<Wₘᵢₙ*(*i*)*.* In response to the conditions satisfied, it is determined that the target point data *T*_{*A*M*T*}(*i*) matches with the corresponding target point data *T*_{*Am*1*T*}(*j*) or in response to the conditions not satisfied, it is determined that the target point data *T*_{*A*M*T*}(*i*) does not match with the corresponding target point data *T*_{*Am*1T}(*j*)*.*

In some embodiments, after searching for the respective one of the target point data *T_{AMT}* corresponding to each of the target point data *T*_{*Am*1*T*}(*j*) among I*_{AMT}* of the target point data *T_{AMT}*(*i*) respectively, determining the correspondence between the first echo signal and the M transmit channels based on the matching result, includes: determining, based on the correspondence between the target point data *T_{AMT}*(i) and the target point data *T*_{*Am*1*T*}(*j*)*,* a transmit channel corresponding to the m1 transmit channel in the M transmit channels; and determining, based on the transmit channel corresponding to the m1 transmit channel in the M transmit channels, the correspondence between the first echo signal and the M transmit channels.

In some embodiments, the method further includes: after determining the correspondence between the first echo signal and the M transmit channels based on the matching result, correcting the first target data according to the correspondence between the first echo signal and the M transmit channels to obtain a third target data.

In some embodiments, m1 is equal to 1 and the m1 transmit channels for transmitting the second detection signal include a first transmit channel. Determining, based on the correspondence between the target point data *T_{AMT}*(i) and the target point data *T*_{*Am*1*T*}(j), the transmit channel corresponding to the m1 transmit channels in the M transmit channels, includes: determining, based on the correspondence between the target point data *T_{AMT}*(i) and the target point data *T*_{*Am*1*T*}(j)*,* a second transmit channel corresponding to the first transmit channel in the M transmit channels. Correcting the first target data according to the correspondence between the first echo signal and the M transmit channels to obtain the third target data, includes: correcting the first target data according to a position of the second transmit channel in the M transmit channels to obtain the third target data.

In some embodiments, the radar includes L physical receive channels, and the method further includes: performing a channel separation on the third target data to obtain target data corresponding to M*L virtual receive channels; and performing an angle measurement on the target based on the target data corresponding to the M*L virtual receive channels. Herein, L is an integer greater than 0.

In some embodiments, performing the first processing on the first echo signal to obtain the first target data includes: performing a channel separation on the first echo signal and obtaining the first target data based on a channel separation result.

In some embodiments, performing the angle measurement on the target includes: performing the angle measurement on the target by means of a Digital Beam Forming (DBF) algorithm or a Deterministic Maximum Likelihood (DML) algorithm.

In some embodiments, performing the first processing on the first echo signal to obtain the first target data includes performing a channel separation on the first echo signal and obtaining the first target data based on a channel separation result.

In some embodiments, the first processing and/or the second processing includes a constant false alarm rate, CFAR, detector.

In some embodiments, one or both of the first processing and the second processing further includes at least one of the following processing: an analog-to-digital conversion (ADC), a 1D-discrete Fourier transform (for example, 1D-FFT), a 2D-discrete Fourier transform (2D-FFT) and a non-coherent integration (NCI).

In some embodiments, the first detection signal or the second detection signal is a frequency modulated continuous wave (FMCW) signal.

In some embodiments, the first detection signal is a TDM signal and the second detection signal is a DDM signal.

In some embodiments, a velocity ambiguity resolution is performed alternately based on the first echo signal and the second echo signal.

The claimed embodiments of the present disclosure provide a signal processing device, including a transceiver and a processor. The transceiver includes multiple antennas and the signal processing device is configured to perform the signal processing method as described in any one of the preceding items.

The claimed embodiments of the present disclosure provide a radar, including a transceiver and a processor. The transceiver includes multiple antennas and the radar is configured to perform the signal processing method as described in any one of the preceding items.

The claimed embodiments of the present disclosure provide a readable storage medium configured to store a computer program or instructions, which, when executed by the above radar, causes the radar to implement the method as described in any one of the preceding items.

The claimed embodiments of the present disclosure provide a computer program product, including computer readable instructions, the computer readable instructions, when read and executed by the above radar, cause the radar to implement the method as described in any one of the preceding items.

Some embodiments of the present disclosure provide a terminal including the radar as described above.

In some embodiments, the terminal includes a vehicle, a smart home device, or a smart robot.

The technical solutions provided by embodiments of the present disclosure have at least the following advantages.

Two types of detection signals, i.e., the first detection signal and the second detection signal, are provided, and the first detection signal and the second detection signal are transmitted through different periods and different numbers of channels. In this way, after reflection by the target, two types of echo signals, i.e., the first echo signal and the second echo signal, may be obtained. The second echo signal may be used to provide a reference for the first echo signal, so that the correspondence between the first echo signal and the M transmit channels transmitting the first detection signal can be accurately determined, which can provide more measurement information that is more accurate and is advantageous to better meet the radar measurement requirements.

### BRIEF DESCRIPTION OF THE DRAWINGS

FIG. 1 is a brief flow diagram of a signal processing method according to an embodiment of the present disclosure;
FIG. 2 is a schematic diagram of a waveform with two sub-waveforms according to an embodiment of the present disclosure;
FIG. 3 is a schematic diagram of another waveform with two sub-waveforms according to an embodiment of the present disclosure;
FIG. 4 is a general flow diagram of a signal processing method according to an embodiment of the present disclosure;
FIG. 5 is a schematic diagram of an initial channel separation according to an embodiment of the present disclosure; and
FIG. 6 is a flowchart of matching a first target data with a second target data according to an embodiment of the present disclosure.

### DETAILED DESCRIPTION OF THE EMBODIMENTS

The present disclosure is described in further detail below in connection with the accompanying drawings and embodiments. It shall be understood that the specific embodiments described herein are only intended to explain the present disclosure, but not to limit the present disclosure. It should also be noted that, for the purpose of description, the accompanying drawings show only part relevant to the present disclosure rather than all of the structure.

In existing technologies, a transmit module of a radar generates a transmit waveform according to its configuration, and modulates the transmit waveform to a specified frequency band to generate a transmit signal. The transmit signal is sent to a transmit channel, the transmit channel radiates the transmit signal, and the transmit signal is reflected by a target to generate an echo signal. A receive channel may receive the echo signal and send the echo signal to a receive module. The receive module processes the received echo signal to obtain a baseband echo signal, a signal processing module performs a digital signal processing on the baseband echo signal, detects the target and estimates target parameters, and finally sends the target parameters to a tracking end for application layer processing. Herein, the radar described in the embodiments of the present disclosure may be a millimeter wave radar, and further, may be a multiple input multiple output (MIMO) millimeter wave radar.

Waveforms of existing MIMO radars include a DDM waveform, and such radars have a higher transmit power, a longer target detection range, and a larger range of unambiguous velocity, but the DDM waveform of the existing technologies adopt unequally spaced Doppler frequencies in order to be able to determine a transmit order of each of the transmit channels.

In summary, some embodiments of the present disclosure provide a signal processing method which determine a transmit order of each of the transmit channels while employing the DDM waveform with an equally spaced Doppler frequency. In the method, a waveform of combination of a TDM waveform and the DDM waveform with the equally spaced Doppler frequency is designed to provide a matching method between the two waveforms, so as to achieve the determination of the transmit order of each of the transmit channels corresponding to the DDM waveform with the equally spaced Doppler frequency by the TDM waveform and further to improve accuracy of angle measurement of DDM radar with the equally spaced Doppler frequency.

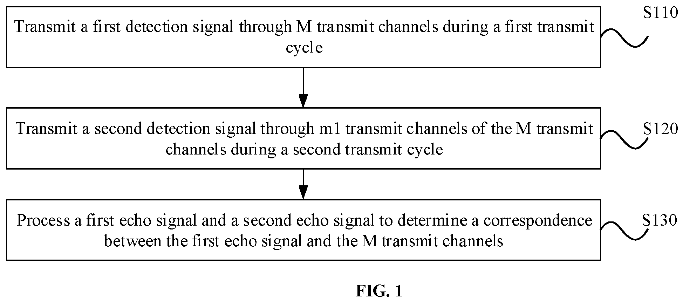

Referring to FIG. 1, the signal processing method is applied to a radar including M transmit channels, and specifically includes the following operations.

In S110, a first detection signal is transmitted through the M transmit channels during a first transmit cycle.

In S120, a second detection signal is transmitted through m1 transmit channels in the M transmit channels during a second transmit cycle, where 1≦m1<M and M is an integer greater than 1.

In S130, a first echo signal and a second echo signal are processed to determine a correspondence between the first echo signal and the M transmit channels. The first echo signal and the second echo signal are signals generated after the first detection signal and the second detection signal being reflected by the target, respectively.

In the claimed embodiments, the first detection signal transmitted during the first transmit cycle is a DDM signal, and the second detection signal transmitted during the second transmit cycle is a TDM signal.

Based on this, in the claimed embodiments, the DDM signal is also an equally spaced DDM signal.

For the DDM signal, existing implementation is to transmit simultaneously through multiple transmit channels of the radar to overcome a problem of the TDM not being able to fully utilize the transmit channels. However, it is difficult to achieve the channel separation of the simultaneously transmitted DDM signals when receiving the echo signal. In order to solve this problem, existing solutions adopt a method of transmitting non-equally spaced DDM signals. However, the non-equally spaced DDM signals may affect a maximum unambiguous velocity of signal processing in turn.

In the above-mentioned embodiment, however, equally spaced DDM signals are provided to make the transmitted DDM signals no longer have frequency bias between them, i.e., transmitting equally spaced DDM signals, which in turn does not affect the maximum unambiguous velocity of the signal processing. And multiple virtual channels formed by channel separation of the TDM waveform in a time domain provide a reference for multiple virtual channels formed by channel separation of the DDM waveform in a Doppler frequency domain. That is, the embodiments of the present disclosure determine each of the transmit channels corresponding to a respective one of the DDM signals through the TDM signals, which solves the problem of determination of each of the transmit channels corresponding to a respective one of the equally spaced DDM waveforms, and facilitates improvement of the accuracy of channel separation of equally spaced DDM waveforms. Due to the absence of leakage effects and with a simple algorithm, a small calculation volume, a high matching rate and good robustness, the embodiments of the present disclosure can further improve the accuracy of the angle measurement of the DDM radar with the equally spaced Doppler frequency by improving the accuracy of the channel separation of the equally spaced DDM waveforms.

Herein, the TDM waveform described in the above-described embodiment may also be understood as a transmitted detection signal being the TDM signal. Similarly, the DDM waveform described in the above-described embodiment may also be understood as a transmitted detection signal being the DDM signal. In addition, the TDM waveform described in the above-described embodiment may also be expressed as a TDM-MIMO, a TDM-MIMO waveform, or a TDM-MIMO signal. Similarly, the DDM waveform described in the above-described embodiment may also be expressed as a DDM-MIMO, a DDM-MIMO waveform, or a DDM-MIMO signal.

As can be seen, in the above embodiment, the design that combines the TDM-MIMO waveform and the DDM-MIMO waveform, with the DDM-MIMO waveform designed with equal spacing, not only can use the TDM-MIMO waveform to provide a reference for the channel separation of the DDM-MIMO waveform, but also has the following advantages: (1) combining advantages of the TDM-MIMO and the DDM-MIMO, having a long detection range, no false alarms caused by leakage, fully utilizing the number of multiple input and output channels, high angle accuracy and resolution, and good robustness of angle measurement; and (2) the DDM-MIMO waveform with equal Doppler spacing is more robust than the DDM-MIMO waveform with non-equal spacing in CFAR detection, is not affected by leakage, and has no false alarm problem caused by leakage.

Both a sequential transmission relationship between the first detection signal and the second detection signal and a sequential processing relationship between the first echo signal and the second echo signal are not limited in the present disclosure. Exemplarily, the first detection signal may be transmitted first, followed by the second detection signal, or the second detection signal may be transmitted first, followed by the first detection signal. Alternatively, the first echo signal may be processed first, followed by the second echo signal, or the second echo signal may be processed first, followed by the first echo signal, which is not limited herein.

In some embodiments, the signal processing method provided by embodiments of the present disclosure may periodically alternate between transmitting the first detection signal and transmitting the second detection signal. For example, a periodic transmission may be carried out in an order like the first detection signal, the second detection signal, the first detection signal, the second detection signal, the first detection signal, the second detection signal, and so on. Further, for example, the periodic transmission may also be carried out in an order like the second detection signal, the first detection signal, the second detection signal, the first detection signal, the second detection signal, the first detection signal, and so on.

In some embodiments, after the correspondence between the first echo signal and the M transmit channels is determined, the channel separation of the first echo signal may also be performed according to the correspondence between the first echo signal and the M transmit channels.

In the claimed embodiments, transmitting the first detection signal through the M transmit channels is achieved by: transmitting the first detection signal with pulses phase-stepped by $\left(e-1\right) * \frac{2 ∗ π}{M}$ through an eth transmit channel in the M transmit channels, where e∈{1, 2, 3,..., M}, such that a waveform corresponding to the first detection signal is a waveform with the equally spaced Doppler frequency.

In some embodiments, operation S130 further includes the following operations.

In S131, a first processing is performed on the first echo signal to obtain a first target data.

In S132, a second processing is performed on the second echo signal to obtain a second target data.

In S133, a matching processing is performed on the first target data and the second target data, and the correspondence between the first echo signal and the M transmit channels is determined based on a matching result.

In some embodiments, the first processing and/or the second processing includes a constant false alarm rate (CFAR) detection, which helps to reduce false alarms and improve the accuracy of radar measurements.

In some embodiments, the first processing and/or second processing further includes at least one of the following processing: an analog-to-digital conversion (ADC), a 1D-discrete Fourier transform (1D-FFT), a 2D-discrete Fourier transform (2D-FFT) and a non-coherent integration (NCI).

In some embodiments, performing the first processing on the first echo signal to obtain the first target data may be achieved by: performing a channel separation on the first echo signal and obtaining the first target data based on a channel separation result.

In some embodiments, performing the second processing on the second echo signal to obtain the second target data may be achieved by: performing the channel separation on the second echo signal, and obtaining the second target data based on the channel separation result.

In some embodiments, after the processing described above, the first target data obtained includes target point data *T_{AMT}*(*i*), where i ∈ {1,..., I*_{AMT}*}; the second target data obtained includes target point data *T*_{*Am*1*T*}(j)*,* where j∈ {1,..., J_{*Am*1T}}. That is, the first target data includes I*_{AMT}* target point data *T_{AMT}*(*i*)*,* and the second target data includes *J*_{*Am*1*T*} target point data *T*_{*Am*1*T*}(j)*.*

Based on this, performing the matching processing on the first target data and the second target data may be achieved by: searching for a respective one of the target point data *T_{AMT}*(*i*) corresponding to each of the target point data *T*_{*Am*1*T*}(j) among I*_{AMT}* of the target point data *T_{AMT}*(*i*)*,* respectively.

It should be noted that the above searching method may be implemented in any of the ways in which the target point data *T_{AMT}*(i) and the target point data *T*_{*Am*1*T*}(*j*) reflecting the same target may be found. In order to facilitate the understanding of those skilled in the art, the following examples are given, but it does not imply that it may only be implemented in the following manner. For example, it may also be implemented using a closest point matching algorithm, etc.

In some embodiments, in a case that the target point data *T_{AMT}*(*i*) includes a range unit data *k_{AMT}*(*i*) and a velocity unit data *P_{AMT}*(*i*) corresponding to the target, and the target point data *T*_{*Am*1*T*}(j) includes a range unit data *k*_{*Am*1*T*}(*j*) and a velocity unit data *p*_{*Am*1*T*}(*j*) corresponding to the target, the respective one of the target point data *T_{AMT}*(*i*) corresponding to each of the target point data *T*_{*Am*1*T*}(j) may be searched among I*_{AMT}* of the target point data *T_{AMT}*(*i*) respectively by the following ways.
(1) A first weight value *W_{R}*(*i, j, q),* a second weight value *W_{V}*(*i, j, q),* and a third weight value *W_{RV}*(*i, j, q*) are determined according to the following formulas, respectively:
   ${W}_{R} \left(i, j, q\right) = \left|{k}_{A M T}\left(i\right)-{k}_{Am 1 T}\left(j\right)\right| ;$
   ${W}_{V} \left(i, j, q\right) = \left|\left({P}_{AMT}\left(i\right)+q\frac{{p}_{A}}{M}\right)-{p}_{Am 1 T}\left(j\right)\right| ;$
   ${W}_{RV} \left(i, j, q\right) = \partial ⋅ {W}_{R} \left(i, j, q\right) + β ⋅ {W}_{V} \left(i, j, q\right) ;$
   where ∂ and *β* are predetermined coefficients corresponding to the first weight value *W_{R}*(*i, j, q*) and the second weight value *W_{V}*(*i, j, q),* respectively, and in some cases, ∂+*β*=1, thus enabling a more intuitive reflection of contribution of the first weight value *W_{R}*(*i, j, q*) and the second weight value *W_{V}*(*i, j, q*) to the third weight value *W_{RV}*(*i, j, q*)*.* For example, both ∂ and *β* are 0.5, meaning that equal reference to the first weight value *W_{R}*(*i, j, q*) and the second weight value *W_{V}*(*i, j, q*) is made in the third weight value, providing a more balanced and comprehensive reflection to characteristics of the target data. Alternatively, values of *a* and *β* may be adjusted according to specific situation in other embodiments. When a range gate has a larger influence, the value of *∂* may be larger than *β*. When a velocity gate has a larger influence, the value of *β* may be larger than ∂, which is not limited herein.
(2) In a case that each of the weight values corresponds to predetermined decision thresholds *TH_{R}*, *TH_{V}*, *Wₘᵢₙ*(*i*), respectively, whether the target point data *T*_{*A*M*T*}(*i*) matches with the target point data *T*_{*Am*1*T*}(*j*) is determined according to the following conditions:
   ${W}_{R} \left(i, j, q\right) < {TH}_{R} , {W}_{V} \left(i, j, q\right) < {TH}_{V} , {W}_{RV} \left(i, j, q\right) < {W}_{min} \left(i\right) .$

In a case that a minimum weight value determination is satisfied, it is determined that the target point data *T*_{*A*M*T*}(*i*) matches with the corresponding target point data *T*_{*Am*1*T*}(*j*)*.* Optionally, it is considered that the above minimum weight value determination is satisfied when at least one of the above three determination formulas is satisfied.

Or, in a case that the above minimum weight value determination is not satisfied, it is determined that the target point data *T*_{*A*M*T*}(*i*) does not match with the corresponding target point data *T*_{*Am*1*T*}(*j*)*.* For example, if none of the above three determination formulas is satisfied, it is considered that the above minimum weight value determination is not satisfied.

After the above matching, that is, after searching for the corresponding target point data *T_{AMT}*(*i*) among I*_{AMT}* of the target point data *T_{AMT}*(i)*,* respectively, transmit channels corresponding to the m1 transmit channels in the M transmit channels are determined; and the correspondence between the first echo signal and the M transmit channels is determined according to the corresponding transmit channels.

In some embodiments, the method further includes: after determining the correspondence between the first echo signal and the M transmit channels based on the matching result, correcting the first target data based on the correspondence between the first echo signal and the M transmit channels to obtain a third target data.

It should be noted that the third weight value *W_{RV}*(*i, j, q*) is mainly used to comprehensively evaluate whether the target point data *T*_{*A*M*T*}(*i*) matches with the corresponding target point data *T*_{*Am*1*T*}(*j*) from the velocity gate and the range gate, and setting the third weight value *W_{RV}*(*i, j, q)* helps to improve the accuracy of the match. In some cases, it is also possible to determine without the third weight value *W_{RV}*(*i, j, q),* which will not be described here.

In some embodiments, when m1 is equal to 1, i.e., the m1 transmit channels used to transmit the second detection signal include a first transmit channel, determining the transmit channel corresponding to the m1 transmit channel in the M transmit channels according to the correspondence between the target point data *T_{AMT}*(i) and the target point data *T*_{*Am*1*T*}(j) may be achieved by: determining a second transmit channel corresponding to the first transmit channel among the M transmit channels according to the correspondence between the target point data *T_{AMT}*(i) and the target point data *T*_{*Am*1*T*}(j).

Accordingly, the first target data is corrected according to the correspondence between the first echo signal and the M transmit channels to obtain the third target data, which may be achieved by: correcting the first target data according to a position of the second transmit channel in the M transmit channels to obtain the third target data.

In some embodiments, the radar includes L physical receive channels, and after performing a first channel separation on the first echo signal, M*L virtual receive channels may be obtained. Accordingly, a second channel separation may also be performed on the third target data to obtain target data corresponding to the M*L virtual receive channels. Thus, according to the target data corresponding to the M*L virtual receive channels, angle measurement, target analysis, and other operations may be performed on the target.

Herein, a digital beam forming (DBF) algorithm or a deterministic maximum likelihood (DML) algorithm may be used for the angle measurement for the target, which is not limited here and may be adjusted according to the specific situation.

In some embodiments, a number of transmit channels M corresponding to the first detection signal is 4, a number of transmit channels m1 corresponding to the second detection signal is 1, and the second detection signal is transmitted through a first channel TX1, and numbers of physical receive channels corresponding to both the first detection signal and the second detection signal are L_{A}. That is, the first detection signal corresponds to 4T DDM-MIMO waveform, and the second detection signal corresponds to 1T TDM-MIMO waveform.

In some embodiments, the physical receive channels corresponding to the first detection signal and the second detection signal are typically 4, i.e., L_{A}=4.

To facilitate a better understanding of the above embodiments by those skilled in the art, further explanation will be provided below.

The first detection signal is generated by the 4T DDM-MIMO waveform, hereinafter referred to as an A_4T waveform. The second detection signal is generated by the 1T TDM-MIMO waveform, hereinafter referred to as a A_1T waveform. 4T means that the first detection signal includes four channels of signals, and 1T means that the second detection signal includes one channel of signals.

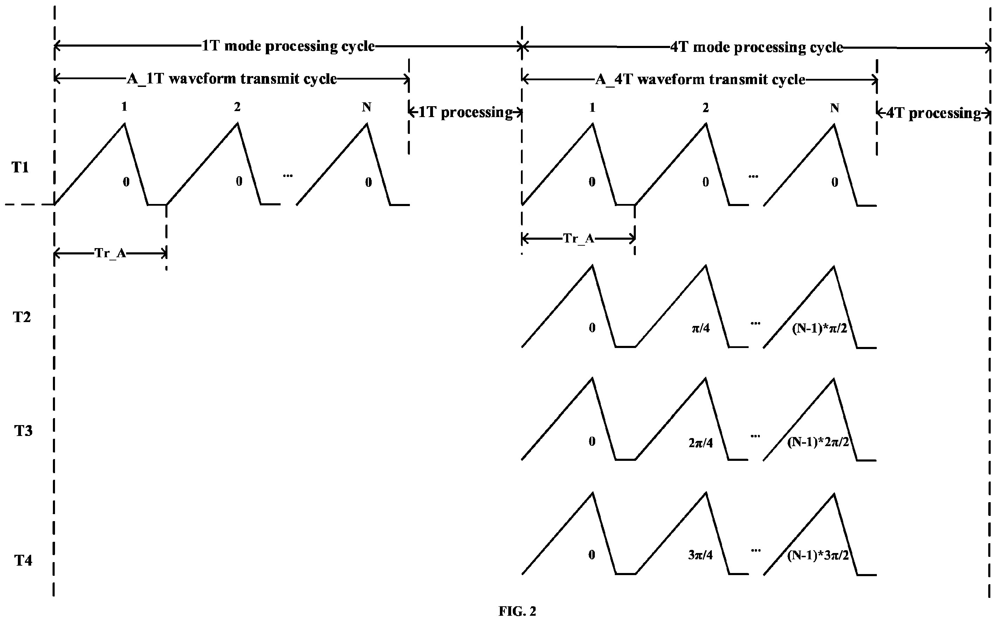

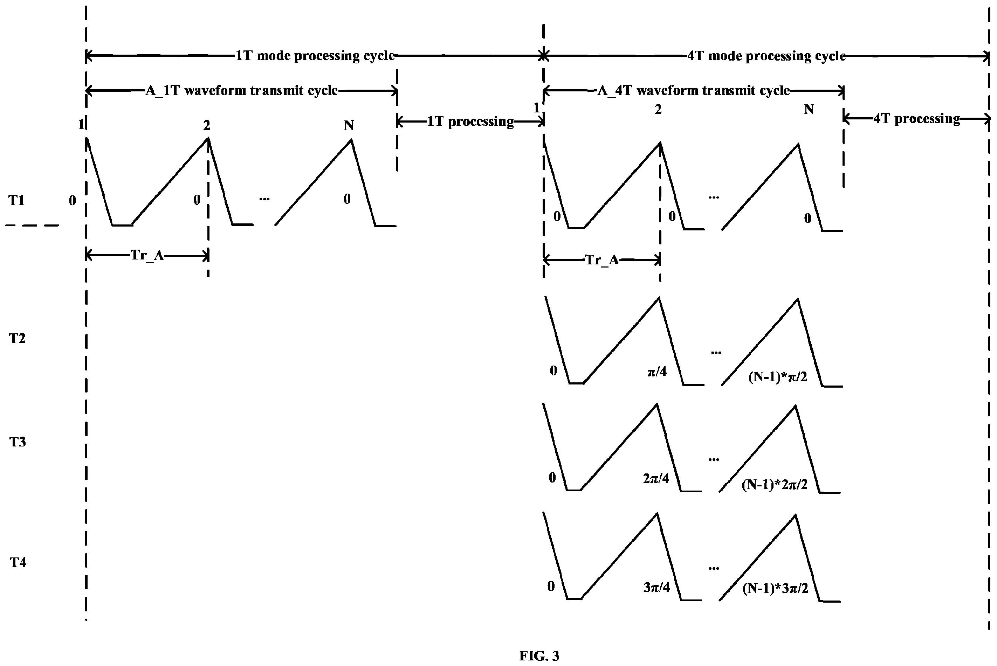

A DDM spacing between signals transmitted from four transmit channels TX1, TX2, TX3, and TX4 is phase-stepped by $\left(e-1\right) * \frac{2 ∗ π}{4}$, where e∈{1, 2, 3, 4}, which means an equally spaced DDM waveform with four channels. Reference may be made to FIG. 2 and FIG. 3 for details. The A_4T waveform is a frequency modulation continuous wave (FMCW) signal, T1, T2, T3, and T4 simultaneously transmit N_{A} pulses, with a pulse period of *Tr_{A}*. Parameters (bandwidth, FM slope, sampling rate \ sample start point \ end point, etc.) within the pulses in the A_4T waveform are the same as those of the A_1T waveform, and only initial phases of the pulses are different, which are as follows.
T1 transmission: the pulses are phase-stepped by 0rad, respectively: 0, 0, 0, ..., 0;
T2 transmission: the pulses are phase-stepped by $\frac{π}{2}$, respectively: $0 , 1 ⋅ \frac{π}{2} , 2 ⋅ \frac{π}{2} … , \left({N}_{A}-1\right) ⋅ \frac{π}{2}$ ;
T3 transmission: the pulses are phase-stepped by $\frac{2 π}{2}$, respectively: $0 , 1 ⋅ \frac{2 π}{2} , 2 ⋅ \frac{2 π}{2} … , \left({N}_{A}-1\right) ⋅ \frac{2 π}{2}$ ;
T4 transmission: the pulses are phase-stepped by $\frac{3 π}{2}$, respectively: $0 , 1 ⋅ \frac{3 π}{2} , 2 ⋅ \frac{3 π}{2} … , \left({N}_{A}-1\right) ⋅ \frac{3 π}{2}$ .

That is, when there are e transmit channels, each pulse sent in a sth transmit channel is phase-stepped by $\left(s-1\right) * \frac{2 ∗ π}{e}$, where s∈{1, 2, ..., e}, and e is a positive integer.

It should be noted that, as can be seen with reference to FIGs. 2 and 3, the first detection signal and the second detection signal may not only use a rising segment of the pulse, but also use a falling segment of the pulse. The pulse described in the embodiments of the present disclosure may also be referred to as chirp. Further, the first detection signal and the second detection signal may also use the rising segment of the pulse and the falling segment of the pulse, respectively. Pulse waveforms of the first detection signal and the second detection signal may be designed flexibly.

Referring to FIGs. 2 and 3 again, the A_1T waveform is the FMCW signal, T1 transmits N_{A} pulses with a pulse period of *Tr_{A}*, and an initial phase of each pulse modulation is phase-stepped by 0rad, respectively: 0, 0, 0, ···, 0.

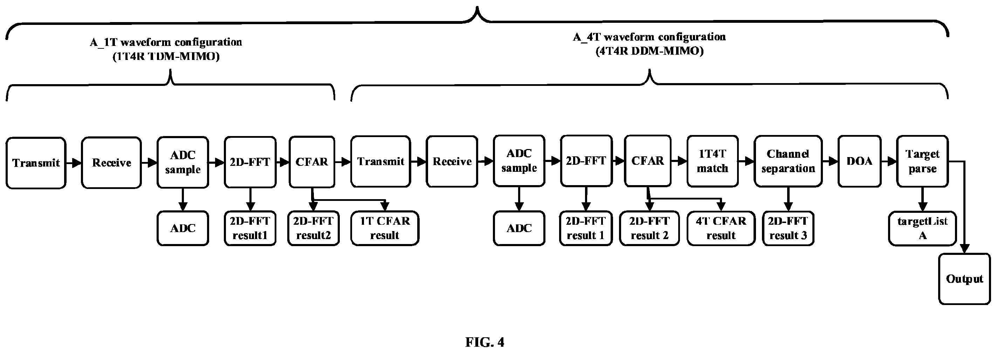

Referring to FIG. 4, the two signals are processed as follows.

### I. A_1T waveform processing procedure

(1) The second detection signal generated by the A_1T waveform is transmitted by one transmit channel, and is received by each of the receive channels after being reflected by the target. After each of the receive channels (4 in total) is subject to ADC sample, ADC data is generated, which may be expressed as follows:
   ${S}_{A 1 TADC} \left(m, n, l\right) , m ∈ \left\{1,2,…,{M}_{A}\right\} , n ∈ \left\{1,2,…,{N}_{A}\right\} , l ∈ \left\{1,2,…,{L}_{A}\right\} ;$
   where, *M_{A}* is a number of sampling points inside the pulse, *N_{A}* is a number of pulses, and *L_{A}* is a number of the receive channels.
(2) The ADC data, after 2D-FFT (range and velocity 2D-FFT) processing, may be expressed as:
   ${S}_{A 1 T 2 DFFT 1} \left(k, p, l\right) , k ∈ \left\{1,2,…,{K}_{A}\right\} , p ∈ \left\{1,2,…,{P}_{A}\right\} , l ∈ \left\{1,2,…,{L}_{A}\right\} ;$
   where, *K_{A}* is a number of FFT points in the range gate, *P_{A}* is a number of FFT points in a velocity gate, and *L_{A}* is the number of the receive channels.
(3) NCI is performed on the *S*_{*A*1*T*2*DFFT*1}(*k, p, l*) data after the 2D-FFT processing to form a detection matrix, which is expressed as follows: $\begin{matrix}{S}_{A 1 TNCI} \left(k, p\right) = \frac{1}{{L}_{A}} ⋅ {{\sum }_{l = 1}^{{L}_{A}} \left|{S}_{A 1 T 2 DFFT 1}\left(k, p, l\right)\right|}^{2} , k ∈ \left\{1,2, …, {K}_{A}\right\} , p ∈ \\ \left\{1,2, …, {P}_{A}\right\} ;\end{matrix}$
   where, *K_{A}* is the number of FFT points in the range gate and *P_{A}* is the number of FFT points in the velocity gate.
(4) CFAR detection is performed based on a *S*_{*A*1*TNCI*}(*k, p*) plane, and assuming that *J*_{*A*1*T*} targets are detected, a detection result is expressed as:
   ${T}_{A 1 T} \left(j\right) , j ∈ \left\{1,2,…,{J}_{A 1 T}\right\} ;$

At this point, a range unit and a velocity unit of each target are:
${k}_{A 1 T} \left(j\right) ∈ \left\{1,2,…,{K}_{A}\right\} ;$
${p}_{A 1 T} \left(j\right) ∈ \left\{1,2,…,{P}_{A}\right\} ;$

*I*_{*A*1*T*} targets *T*_{*A*1*T*}(*j*) are obtained by the CFAR detection, and constitute the second target data. Detected targets are stored in memory for later A _4T wave processing.

### II. A_4T signal processing procedure

(1) The first detection signal generated by the A_4T waveform is transmitted by four transmit channels, and received by each of the receive channels after being reflected by the target. After each of the receive channels (4 in total) is subject to the ADC sample, ADC data is generated and is expressed as follows:
   ${S}_{A 4 TADC} \left(m, n, l\right) , m ∈ \left\{1,2,…,{M}_{A}\right\} , n ∈ \left\{1,2,…,{N}_{A}\right\} , l ∈ \left\{1,2,…,{L}_{A}\right\} ;$
   where, *M_{A}* is the number of sampling points inside the pulse, *N_{A}* is the number of pulses, and *L_{A}* is the number of the receive channels.
(2) The ADC data, after 2D-FFT (range and velocity 2D-FFT) processing, may be expressed as:
   ${S}_{A 4 T 2 DFFT 1} \left(k, p, l\right) , k ∈ \left\{1,2,…,{K}_{A}\right\} , p ∈ \left\{1,2,…,{P}_{A}\right\} , l ∈ \left\{1,2,…,{L}_{A}\right\} ;$
   where, *K_{A}* is the number of FFT points in the range gate, *P_{A}* is the number of FFT points in the velocity gate, and *L_{A}* is the number of the receive channels;
(3) The *S*_{*A*4*T*2*DFFT*}(*k, p, l*) signal is subject to preliminary channel separation, and separated signal is expressed as:
   ${S}_{A 4 T 2 DFFT 2} \left(k, p, l\right) , k ∈ \left\{1,2,…,{K}_{A}\right\} , p ∈ \left\{1,2,…,\frac{{P}_{A}}{4}\right\} , l ∈ \left\{1,2,…,4{L}_{A}\right\} ;$

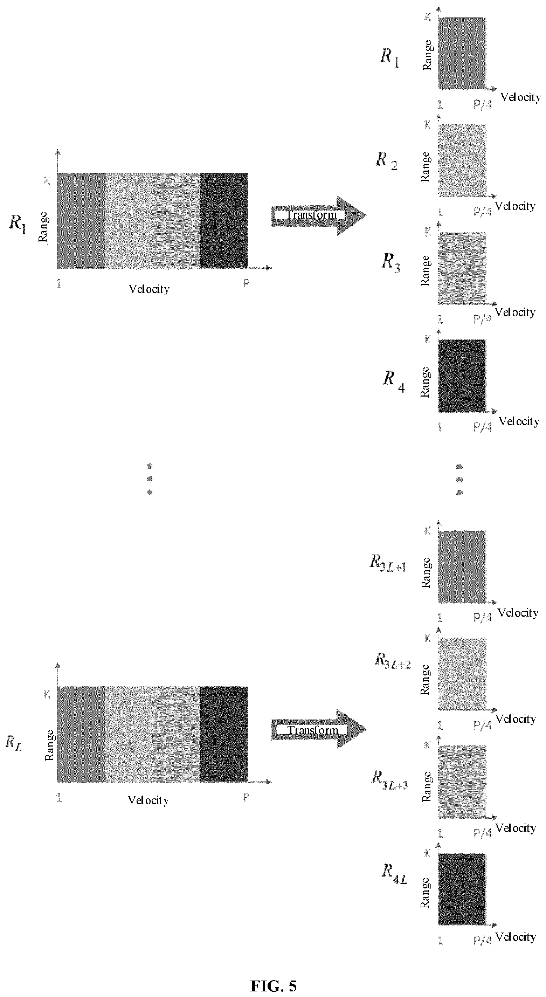

To further illustrate the method of the preliminary channel separation, as shown in FIG. 5, 2D-FFT data of *R*₁ receive channel is sliced into 4 receive channels, that is, the whole velocity gate (called 1 whole region of DDM-MIMO) is evenly divided into 4 parts (called 4 sub-regions of DDM-MIMO) to form data of the 4 receive channels, and each of the other receive channels is operated according to this method to form a total of 16 receive channel data.

In some cases, the number of R1 receive channels refers to the physical receive channels, and the 4 receive channels formed after the slice refers to the virtual receive channels.

(4) NCI is performed on the *S*_{*A*4*T*2*DFFT*2}(*k, p, l*) data after channel separation to form the detection matrix, expressed as follows: $\begin{matrix}{S}_{A 4 TNCI} \left(k, p\right) = \frac{1}{4 {L}_{A}} ⋅ {{\sum }_{l = 1}^{4 {L}_{A}} \left|{S}_{A 4 T 2 DFFT 2}\left(k, p, l\right)\right|}^{2} , k ∈ \left\{1,2, …, {K}_{A}\right\} , p ∈ \\ \left\{1,2, …, {P}_{A}\right\} ;\end{matrix}$
where, *K_{A}* is the number of FFT points in the range gate and *P_{A}* is the number of FFT points in the velocity gate.

(5) CFAR detection is performed based on the *S*_{*A*4*TNCI*}(*k, p*) plane, and assuming that *I*_{*A*4*T*} targets are detected, the detection result is expressed as:
${T}_{A 4 T} \left(i\right) , i ∈ \left\{1,2,…,{I}_{A 4 T}\right\} ;$

At this point, the range unit and the velocity unit of each target are:
${k}_{A 4 T} \left(i\right) ∈ \left\{1,2,…,{K}_{A}\right\} ;$
${p}_{A 4 T} \left(i\right) ∈ \left\{1,2,…,\frac{{P}_{A}}{4}\right\} ;$

*I*_{*A*4*T*} targets *T*_{*A*4*T*}(*i*) are obtained by CFAR detection, which constitute the second target data and stored in memory for later processing.

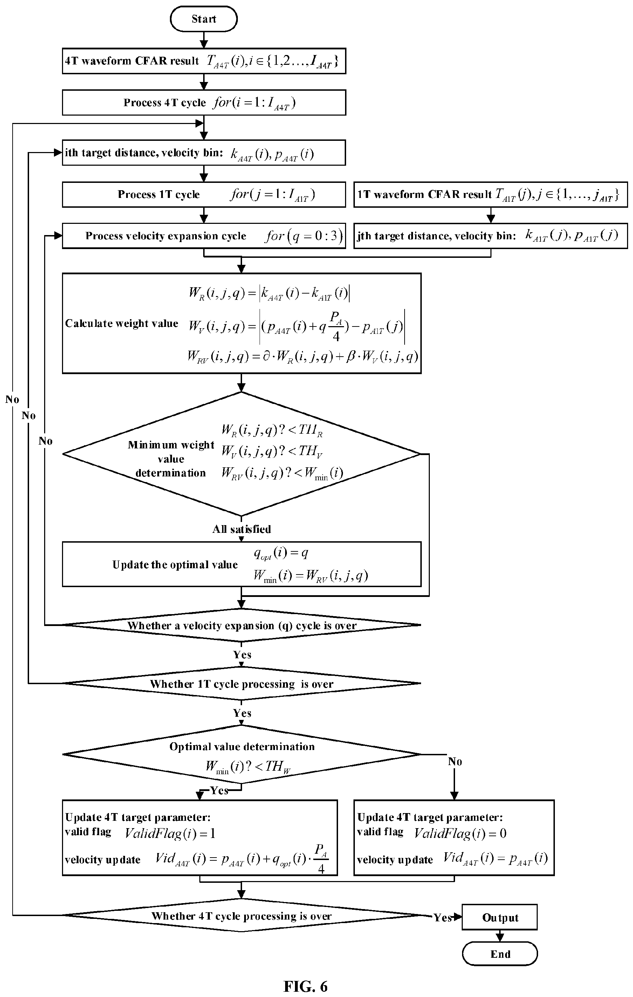

III. After the CFAR processing for the first detection signal and the second detection signal, a matching processing is performed on the first target data the second target data. Referring to the flowchart shown in FIG. 6, the matching procedure is specified as follows.
(1) The target *T*_{*A*1*T*}(*j*) in the second target data is matched with the target *T*_{*A*4*T*}(*i*) in the first target data one by one;
(2) When the target *T*_{*A*4*T*}(*i*) is matched with the target *T*_{*A*1*T*}(*j*) one by one, the following weight value calculation is performed:
   ${W}_{R} \left(i, j, q\right) = \left|{k}_{A 4 T}\left(i\right)-{k}_{A 1 T}\left(j\right)\right| ;$
   ${W}_{V} \left(i, j, q\right) = \left|\left({P}_{A 4 T}\left(i\right)+q\frac{{p}_{A}}{4}\right)-{p}_{A 1 T}\left(j\right)\right| ;$
   ${W}_{RV} \left(i, j, q\right) = \partial ⋅ {W}_{R} \left(i, j, q\right) + β ⋅ {W}_{V} \left(i, j, q\right) ;$

Minimum weight value determination: *W_{R}*(*i, j, q*)? *<TH_{R}*, *W_{V}*(*i, j, q*)? < *TH_{V}*, *W_{RV}*(*i, j, q*)? *<Wₘᵢₙ*(*i*); where "?" means "whether or not".

If the above minimum weight value determinations are satisfied at the same time, it means that the target *T*_{*A*4*T*}(*i*) matches with the target *T*_{*A*1*T*}(*j*)*,* and then proceeds to the next operation. Optionally, when at least one of the above minimum weight value determination formulas is satisfied, it means that the target *T*_{*A*4*T*}(*i*) matches with the target *T*_{*A*1*T*}(*j*)*.*

If the above minimum weight determinations are not satisfied at the same time, it means that there is no match, then the target *T*_{*A*4*T*}(*i*) is matched with the next target *T*_{*A*1*T*}(*j*) using similar procedure as described above, and if there is still no match, then the target *T*_{*A*4*T*}(*i*) is subject to a velocity expansion cycle *f or*(*q* = 0: 3) in the velocity gate, and then matched with each target *T*_{*A*1*T*}(*j*) in the second target data one by one, until it is matched.

(3) When the target *T*_{*A*4*T*}(*i*) is matched with the target *T*_{*A*1*T*}(*j*)*,* an optimal value is updated:
${q}_{opt} \left(i\right) = q ;$
${W}_{min} \left(i\right) = {W}_{RV} \left(i, j, q\right) .$

### (4) Perform optimal value determinations;

If *Wₘᵢₙ*(*i*) is less than a preset threshold value *TH_{W}*, the first target data is updated as follows:
$Valid flag ValidFlag \left(i\right) = 1 ;$
$Velocity update {Vid}_{A 4 T} \left(i\right) = {P}_{A 4 T} \left(i\right) + {q}_{opt} \left(i\right) ∗ \frac{{P}_{A}}{4} ;$

If *Wₘᵢₙ*(*i*) is not less than the preset threshold value *TH_{W}*, the second target data is updated as follows:
$Valid flag ValidFlag \left(i\right) = 0 ;$
$Velocity update {Vid}_{A 4 T} \left(i\right) = {P}_{A 4 T} \left(i\right) .$

(5) For each target *T*_{*A*4*T*}(*i*)*, i* ∈ {1, ..., *I*_{*A*1*T*}} in the first target data, the above matching operations are repeated until a cycle of the *I*_{*A*1*T*} target *T*_{*A*4*T*}(*i*) is completed.

IV. Based on the above matching result, the data *S*_{*A*4*T*2*DFFT*2}(*k, p, l*) (i.e., the first target data) corresponding to a target position of each channel is corrected (rearranged) to generate *S*_{*A*4*T*2*DFFT*3}*(k, p, l*) data (the third target data) so that the data *S*_{*A*4*T*2*DFFT*2}*(k, p, l*) is in the correct channel, i.e., the first target data is corrected to obtain the third target data.

The specific processing flow is as follows:
Based on CFAR results of the A_4T wave, an ith target point is expressed as follows:
${T}_{A 4 T} \left(i\right) , i ∈ \left\{1,2,…,{I}_{A 4 T}\right\} ;$

At this point, the range unit and velocity unit of the target are respectively:
${k}_{A 4 T} \left(i\right) ∈ \left\{1,2,…,{K}_{A}\right\} ;$
${p}_{A 4 T} \left(i\right) ∈ \left\{1,2,…,\frac{{P}_{A}}{4}\right\} ;$

If:
$1 \leq {Vid}_{4 T} \leq \frac{{P}_{A}}{4} ,$
it means that a target velocity causes n whole regions to be offset, or does not cause an offset of one DDM-MIMO sub-region in the velocity gate. In this case, the subsequent direction of arrival (DOA) processing is not affected, so the target position does not need to be changed, that is, the processing is as follows:
${S}_{A 4 T 2 DFFT 3} \left({k}_{A 4 T}\left(i\right),{p}_{A 4 T}\left(i\right),1\right) = {S}_{A 4 T 2 DFFT 2} \left({k}_{A 4 T}\left(i\right),{p}_{A 4 T}\left(i\right),1\right) ;$
${S}_{A 4 T 2 DFFT 3} \left({k}_{A 4 T}\left(i\right),{p}_{A 4 T}\left(i\right),2\right) = {S}_{A 4 T 2 DFFT 2} \left({k}_{A 4 T}\left(i\right),{p}_{A 4 T}\left(i\right),2\right) ;$
${S}_{A 4 T 2 DFFT 3} \left({k}_{A 4 T}\left(i\right),{p}_{A 4 T}\left(i\right),3\right) = {S}_{A 4 T 2 DFFT 2} \left({k}_{A 4 T}\left(i\right),{p}_{A 4 T}\left(i\right),3\right) ;$
${S}_{A 4 T 2 DFFT 3} \left({k}_{A 4 T}\left(i\right),{p}_{A 4 T}\left(i\right),4\right) = {S}_{A 4 T 2 DFFT 2} \left({k}_{A 4 T}\left(i\right),{p}_{A 4 T}\left(i\right),4\right) ;$
${S}_{A 4 T 2 DFFT 3} \left({k}_{A 4 T}\left(i\right),{p}_{A 4 T}\left(i\right),5\right) = {S}_{A 4 T 2 DFFT 2} \left({k}_{A 4 T}\left(i\right),{p}_{A 4 T}\left(i\right),5\right) ;$
${S}_{A 4 T 2 DFFT 3} \left({k}_{A 4 T}\left(i\right),{p}_{A 4 T}\left(i\right),6\right) = {S}_{A 4 T 2 DFFT 2} \left({k}_{A 4 T}\left(i\right),{p}_{A 4 T}\left(i\right),6\right) ;$
${S}_{A 4 T 2 DFFT 3} \left({k}_{A 4 T}\left(i\right),{p}_{A 4 T}\left(i\right),7\right) = {S}_{A 4 T 2 DFFT 2} \left({k}_{A 4 T}\left(i\right),{p}_{A 4 T}\left(i\right),7\right) ;$
${S}_{A 4 T 2 DFFT 3} \left({k}_{A 4 T}\left(i\right),{p}_{A 4 T}\left(i\right),8\right) = {S}_{A 4 T 2 DFFT 2} \left({k}_{A 4 T}\left(i\right),{p}_{A 4 T}\left(i\right),8\right) ;$
${S}_{A 4 T 2 DFFT 3} \left({k}_{A 4 T}\left(i\right),{p}_{A 4 T}\left(i\right),9\right) = {S}_{A 4 T 2 DFFT 2} \left({k}_{A 4 T}\left(i\right),{p}_{A 4 T}\left(i\right),9\right) ;$
${S}_{A 4 T 2 DFFT 3} \left({k}_{A 4 T}\left(i\right),{p}_{A 4 T}\left(i\right),10\right) = {S}_{A 4 T 2 DFFT 2} \left({k}_{A 4 T}\left(i\right),{p}_{A 4 T}\left(i\right),10\right) ;$
${S}_{A 4 T 2 DFFT 3} \left({k}_{A 4 T}\left(i\right),{p}_{A 4 T}\left(i\right),11\right) = {S}_{A 4 T 2 DFFT 2} \left({k}_{A 4 T}\left(i\right),{p}_{A 4 T}\left(i\right),11\right) ;$
${S}_{A 4 T 2 DFFT 3} \left({k}_{A 4 T}\left(i\right),{p}_{A 4 T}\left(i\right),12\right) = {S}_{A 4 T 2 DFFT 2} \left({k}_{A 4 T}\left(i\right),{p}_{A 4 T}\left(i\right),12\right) ;$
${S}_{A 4 T 2 DFFT 3} \left({k}_{A 4 T}\left(i\right),{p}_{A 4 T}\left(i\right),13\right) = {S}_{A 4 T 2 DFFT 2} \left({k}_{A 4 T}\left(i\right),{p}_{A 4 T}\left(i\right),13\right) ;$
${S}_{A 4 T 2 DFFT 3} \left({k}_{A 4 T}\left(i\right),{p}_{A 4 T}\left(i\right),14\right) = {S}_{A 4 T 2 DFFT 2} \left({k}_{A 4 T}\left(i\right),{p}_{A 4 T}\left(i\right),14\right) ;$
${S}_{A 4 T 2 DFFT 3} \left({k}_{A 4 T}\left(i\right),{p}_{A 4 T}\left(i\right),15\right) = {S}_{A 4 T 2 DFFT 2} \left({k}_{A 4 T}\left(i\right),{p}_{A 4 T}\left(i\right),15\right) ;$
${S}_{A 4 T 2 DFFT 3} \left({k}_{A 4 T}\left(i\right),{p}_{A 4 T}\left(i\right),16\right) = {S}_{A 4 T 2 DFFT 2} \left({k}_{A 4 T}\left(i\right),{p}_{A 4 T}\left(i\right),16\right) .$

If:
$\frac{{P}_{A}}{4} + 1 \leq {Vid}_{4 T} \leq 2 ⋅ \frac{{P}_{A}}{4} ,$
it means that the target velocity causes an offset of one DDM-MIMO sub-region, or an offset of n whole regions plus one sub-region. In this case, the DOA angle measurement may have errors, so the target position needs to be adjusted between each of the receive channels, and the processing is as follows:
${S}_{A 4 T 2 DFFT 3} \left({k}_{A 4 T}\left(i\right),{p}_{A 4 T}\left(i\right),1\right) = {S}_{A 4 T 2 DFFT 2} \left({k}_{A 4 T}\left(i\right),{p}_{A 4 T}\left(i\right),2\right) ;$
${S}_{A 4 T 2 DFFT 3} \left({k}_{A 4 T}\left(i\right),{p}_{A 4 T}\left(i\right),2\right) = {S}_{A 4 T 2 DFFT 2} \left({k}_{A 4 T}\left(i\right),{p}_{A 4 T}\left(i\right),3\right) ;$
${S}_{A 4 T 2 DFFT 3} \left({k}_{A 4 T}\left(i\right),{p}_{A 4 T}\left(i\right),3\right) = {S}_{A 4 T 2 DFFT 2} \left({k}_{A 4 T}\left(i\right),{p}_{A 4 T}\left(i\right),4\right) ;$
${S}_{A 4 T 2 DFFT 3} \left({k}_{A 4 T}\left(i\right),{p}_{A 4 T}\left(i\right),4\right) = {S}_{A 4 T 2 DFFT 2} \left({k}_{A 4 T}\left(i\right),{p}_{A 4 T}\left(i\right),1\right) ;$
${S}_{A 4 T 2 DFFT 3} \left({k}_{A 4 T}\left(i\right),{p}_{A 4 T}\left(i\right),5\right) = {S}_{A 4 T 2 DFFT 2} \left({k}_{A 4 T}\left(i\right),{p}_{A 4 T}\left(i\right),6\right) ;$
${S}_{A 4 T 2 DFFT 3} \left({k}_{A 4 T}\left(i\right),{p}_{A 4 T}\left(i\right),6\right) = {S}_{A 4 T 2 DFFT 2} \left({k}_{A 4 T}\left(i\right),{p}_{A 4 T}\left(i\right),7\right) ;$
${S}_{A 4 T 2 DFFT 3} \left({k}_{A 4 T}\left(i\right),{p}_{A 4 T}\left(i\right),7\right) = {S}_{A 4 T 2 DFFT 2} \left({k}_{A 4 T}\left(i\right),{p}_{A 4 T}\left(i\right),8\right) ;$
${S}_{A 4 T 2 DFFT 3} \left({k}_{A 4 T}\left(i\right),{p}_{A 4 T}\left(i\right),8\right) = {S}_{A 4 T 2 DFFT 2} \left({k}_{A 4 T}\left(i\right),{p}_{A 4 T}\left(i\right),5\right) ;$
${S}_{A 4 T 2 DFFT 3} \left({k}_{A 4 T}\left(i\right),{p}_{A 4 T}\left(i\right),9\right) = {S}_{A 4 T 2 DFFT 2} \left({k}_{A 4 T}\left(i\right),{p}_{A 4 T}\left(i\right),10\right) ;$
${S}_{A 4 T 2 DFFT 3} \left({k}_{A 4 T}\left(i\right),{p}_{A 4 T}\left(i\right),10\right) = {S}_{A 4 T 2 DFFT 2} \left({k}_{A 4 T}\left(i\right),{p}_{A 4 T}\left(i\right),11\right) ;$
${S}_{A 4 T 2 DFFT 3} \left({k}_{A 4 T}\left(i\right),{p}_{A 4 T}\left(i\right),11\right) = {S}_{A 4 T 2 DFFT 2} \left({k}_{A 4 T}\left(i\right),{p}_{A 4 T}\left(i\right),12\right) ;$
${S}_{A 4 T 2 DFFT 3} \left({k}_{A 4 T}\left(i\right),{p}_{A 4 T}\left(i\right),12\right) = {S}_{A 4 T 2 DFFT 2} \left({k}_{A 4 T}\left(i\right),{p}_{A 4 T}\left(i\right),9\right) ;$
${S}_{A 4 T 2 DFFT 3} \left({k}_{A 4 T}\left(i\right),{p}_{A 4 T}\left(i\right),13\right) = {S}_{A 4 T 2 DFFT 2} \left({k}_{A 4 T}\left(i\right),{p}_{A 4 T}\left(i\right),14\right) ;$
${S}_{A 4 T 2 DFFT 3} \left({k}_{A 4 T}\left(i\right),{p}_{A 4 T}\left(i\right),14\right) = {S}_{A 4 T 2 DFFT 2} \left({k}_{A 4 T}\left(i\right),{p}_{A 4 T}\left(i\right),15\right) ;$
${S}_{A 4 T 2 DFFT 3} \left({k}_{A 4 T}\left(i\right),{p}_{A 4 T}\left(i\right),15\right) = {S}_{A 4 T 2 DFFT 2} \left({k}_{A 4 T}\left(i\right),{p}_{A 4 T}\left(i\right),16\right) ;$
${S}_{A 4 T 2 DFFT 3} \left({k}_{A 4 T}\left(i\right),{p}_{A 4 T}\left(i\right),16\right) = {S}_{A 4 T 2 DFFT 2} \left({k}_{A 4 T}\left(i\right),{p}_{A 4 T}\left(i\right),13\right) .$

If:
$2 ⋅ \frac{{P}_{A}}{4} + 1 \leq {Vid}_{4 T} \leq 3 ⋅ \frac{{P}_{A}}{4} ,$
it means that the target velocity causes an offset of two DDM-MIMO sub-regions, or an offset of n whole regions plus two sub-regions. In this case, DOA angle measurement may have errors, so the target position needs to be adjusted between each of the receive channels, and the processing is as follows:
${S}_{A 4 T 2 DFFT 3} \left({k}_{A 4 T}\left(i\right),{p}_{A 4 T}\left(i\right),1\right) = {S}_{A 4 T 2 DFFT 2} \left({k}_{A 4 T}\left(i\right),{p}_{A 4 T}\left(i\right),3\right) ;$
${S}_{A 4 T 2 DFFT 3} \left({k}_{A 4 T}\left(i\right),{p}_{A 4 T}\left(i\right),2\right) = {S}_{A 4 T 2 DFFT 2} \left({k}_{A 4 T}\left(i\right),{p}_{A 4 T}\left(i\right),4\right) ;$
${S}_{A 4 T 2 DFFT 3} \left({k}_{A 4 T}\left(i\right),{p}_{A 4 T}\left(i\right),3\right) = {S}_{A 4 T 2 DFFT 2} \left({k}_{A 4 T}\left(i\right),{p}_{A 4 T}\left(i\right),1\right) ;$
${S}_{A 4 T 2 DFFT 3} \left({k}_{A 4 T}\left(i\right),{p}_{A 4 T}\left(i\right),4\right) = {S}_{A 4 T 2 DFFT 2} \left({k}_{A 4 T}\left(i\right),{p}_{A 4 T}\left(i\right),2\right) ;$
${S}_{A 4 T 2 DFFT 3} \left({k}_{A 4 T}\left(i\right),{p}_{A 4 T}\left(i\right),5\right) = {S}_{A 4 T 2 DFFT 2} \left({k}_{A 4 T}\left(i\right),{p}_{A 4 T}\left(i\right),7\right) ;$
${S}_{A 4 T 2 DFFT 3} \left({k}_{A 4 T}\left(i\right),{p}_{A 4 T}\left(i\right),6\right) = {S}_{A 4 T 2 DFFT 2} \left({k}_{A 4 T}\left(i\right),{p}_{A 4 T}\left(i\right),8\right) ;$
${S}_{A 4 T 2 DFFT 3} \left({k}_{A 4 T}\left(i\right),{p}_{A 4 T}\left(i\right),7\right) = {S}_{A 4 T 2 DFFT 2} \left({k}_{A 4 T}\left(i\right),{p}_{A 4 T}\left(i\right),5\right) ;$
${S}_{A 4 T 2 DFFT 3} \left({k}_{A 4 T}\left(i\right),{p}_{A 4 T}\left(i\right),8\right) = {S}_{A 4 T 2 DFFT 2} \left({k}_{A 4 T}\left(i\right),{p}_{A 4 T}\left(i\right),6\right) ;$
${S}_{A 4 T 2 DFFT 3} \left({k}_{A 4 T}\left(i\right),{p}_{A 4 T}\left(i\right),9\right) = {S}_{A 4 T 2 DFFT 2} \left({k}_{A 4 T}\left(i\right),{p}_{A 4 T}\left(i\right),11\right) ;$
${S}_{A 4 T 2 DFFT 3} \left({k}_{A 4 T}\left(i\right),{p}_{A 4 T}\left(i\right),10\right) = {S}_{A 4 T 2 DFFT 2} \left({k}_{A 4 T}\left(i\right),{p}_{A 4 T}\left(i\right),12\right) ;$
${S}_{A 4 T 2 DFFT 3} \left({k}_{A 4 T}\left(i\right),{p}_{A 4 T}\left(i\right),11\right) = {S}_{A 4 T 2 DFFT 2} \left({k}_{A 4 T}\left(i\right),{p}_{A 4 T}\left(i\right),9\right) ;$
${S}_{A 4 T 2 DFFT 3} \left({k}_{A 4 T}\left(i\right),{p}_{A 4 T}\left(i\right),12\right) = {S}_{A 4 T 2 DFFT 2} \left({k}_{A 4 T}\left(i\right),{p}_{A 4 T}\left(i\right),10\right) ;$
${S}_{A 4 T 2 DFFT 3} \left({k}_{A 4 T}\left(i\right),{p}_{A 4 T}\left(i\right),13\right) = {S}_{A 4 T 2 DFFT 2} \left({k}_{A 4 T}\left(i\right),{p}_{A 4 T}\left(i\right),15\right) ;$
${S}_{A 4 T 2 DFFT 3} \left({k}_{A 4 T}\left(i\right),{p}_{A 4 T}\left(i\right),14\right) = {S}_{A 4 T 2 DFFT 2} \left({k}_{A 4 T}\left(i\right),{p}_{A 4 T}\left(i\right),16\right) ;$
${S}_{A 4 T 2 DFFT 3} \left({k}_{A 4 T}\left(i\right),{p}_{A 4 T}\left(i\right),15\right) = {S}_{A 4 T 2 DFFT 2} \left({k}_{A 4 T}\left(i\right),{p}_{A 4 T}\left(i\right),13\right) ;$
${S}_{A 4 T 2 DFFT 3} \left({k}_{A 4 T}\left(i\right),{p}_{A 4 T}\left(i\right),16\right) = {S}_{A 4 T 2 DFFT 2} \left({k}_{A 4 T}\left(i\right),{p}_{A 4 T}\left(i\right),14\right) .$

If:
$3 ⋅ \frac{{L}_{A}}{4} + 1 \leq {Vid}_{4 T} \leq 4 ⋅ \frac{{L}_{A}}{4} ,$
it means that the target velocity causes an offset of three DDM-MIMO sub-regions, or an offset of n whole regions plus three sub-regions. In this case, the DOA angle measurement may have errors, so the target position needs to be adjusted between each of the receive channels, and the processing is as follows:
${S}_{A 4 T 2 DFFT 3} \left({k}_{A 4 T}\left(i\right),{p}_{A 4 T}\left(i\right),1\right) = {S}_{A 4 T 2 DFFT 2} \left({k}_{A 4 T}\left(i\right),{p}_{A 4 T}\left(i\right),4\right) ;$
${S}_{A 4 T 2 DFFT 3} \left({k}_{A 4 T}\left(i\right),{p}_{A 4 T}\left(i\right),2\right) = {S}_{A 4 T 2 DFFT 2} \left({k}_{A 4 T}\left(i\right),{p}_{A 4 T}\left(i\right),1\right) ;$
${S}_{A 4 T 2 DFFT 3} \left({k}_{A 4 T}\left(i\right),{p}_{A 4 T}\left(i\right),3\right) = {S}_{A 4 T 2 DFFT 2} \left({k}_{A 4 T}\left(i\right),{p}_{A 4 T}\left(i\right),2\right) ;$
${S}_{A 4 T 2 DFFT 3} \left({k}_{A 4 T}\left(i\right),{p}_{A 4 T}\left(i\right),4\right) = {S}_{A 4 T 2 DFFT 2} \left({k}_{A 4 T}\left(i\right),{p}_{A 4 T}\left(i\right),3\right) ;$
${S}_{A 4 T 2 DFFT 3} \left({k}_{A 4 T}\left(i\right),{p}_{A 4 T}\left(i\right),5\right) = {S}_{A 4 T 2 DFFT 2} \left({k}_{A 4 T}\left(i\right),{p}_{A 4 T}\left(i\right),8\right) ;$
${S}_{A 4 T 2 DFFT 3} \left({k}_{A 4 T}\left(i\right),{p}_{A 4 T}\left(i\right),6\right) = {S}_{A 4 T 2 DFFT 2} \left({k}_{A 4 T}\left(i\right),{p}_{A 4 T}\left(i\right),5\right) ;$
${S}_{A 4 T 2 DFFT 3} \left({k}_{A 4 T}\left(i\right),{p}_{A 4 T}\left(i\right),7\right) = {S}_{A 4 T 2 DFFT 2} \left({k}_{A 4 T}\left(i\right),{p}_{A 4 T}\left(i\right),6\right) ;$
${S}_{A 4 T 2 DFFT 3} \left({k}_{A 4 T}\left(i\right),{p}_{A 4 T}\left(i\right),8\right) = {S}_{A 4 T 2 DFFT 2} \left({k}_{A 4 T}\left(i\right),{p}_{A 4 T}\left(i\right),7\right) ;$
${S}_{A 4 T 2 DFFT 3} \left({k}_{A 4 T}\left(i\right),{p}_{A 4 T}\left(i\right),9\right) = {S}_{A 4 T 2 DFFT 2} \left({k}_{A 4 T}\left(i\right),{p}_{A 4 T}\left(i\right),12\right) ;$
${S}_{A 4 T 2 DFFT 3} \left({k}_{A 4 T}\left(i\right),{p}_{A 4 T}\left(i\right),10\right) = {S}_{A 4 T 2 DFFT 2} \left({k}_{A 4 T}\left(i\right),{p}_{A 4 T}\left(i\right),9\right) ;$
${S}_{A 4 T 2 DFFT 3} \left({k}_{A 4 T}\left(i\right),{p}_{A 4 T}\left(i\right),11\right) = {S}_{A 4 T 2 DFFT 2} \left({k}_{A 4 T}\left(i\right),{p}_{A 4 T}\left(i\right),10\right) ;$
${S}_{A 4 T 2 DFFT 3} \left({k}_{A 4 T}\left(i\right),{p}_{A 4 T}\left(i\right),12\right) = {S}_{A 4 T 2 DFFT 2} \left({k}_{A 4 T}\left(i\right),{p}_{A 4 T}\left(i\right),11\right) ;$
${S}_{A 4 T 2 DFFT 3} \left({k}_{A 4 T}\left(i\right),{p}_{A 4 T}\left(i\right),13\right) = {S}_{A 4 T 2 DFFT 2} \left({k}_{A 4 T}\left(i\right),{p}_{A 4 T}\left(i\right),16\right) ;$
${S}_{A 4 T 2 DFFT 3} \left({k}_{A 4 T}\left(i\right),{p}_{A 4 T}\left(i\right),14\right) = {S}_{A 4 T 2 DFFT 2} \left({k}_{A 4 T}\left(i\right),{p}_{A 4 T}\left(i\right),13\right) ;$
${S}_{A 4 T 2 DFFT 3} \left({k}_{A 4 T}\left(i\right),{p}_{A 4 T}\left(i\right),15\right) = {S}_{A 4 T 2 DFFT 2} \left({k}_{A 4 T}\left(i\right),{p}_{A 4 T}\left(i\right),14\right) ;$ ${S}_{A 4 T 2 DFFT 3} \left({k}_{A 4 T}\left(i\right),{p}_{A 4 T}\left(i\right),16\right) = {S}_{A 4 T 2 DFFT 2} \left({k}_{A 4 T}\left(i\right),{p}_{A 4 T}\left(i\right),15\right) .$

### V. DOA angle measurement processing

After the correction of the first target data, i.e., after the correction of the preliminary channel separation, the following 2D-FFT data block is formed:
${S}_{A 4 T 2 DFFT 3} \left(k, p, l\right) , k ∈ \left\{1,2,…,{K}_{A}\right\} , p ∈ \left\{1,2,…,\frac{{P}_{A}}{4}\right\} , l ∈ \left\{1,2,…,{L}_{A}\right\}$
where *L_{A}* is 16 (4T4R), which is the number of virtual channels, and an angle measurement is performed on a direction of arrival (DOA) based on *S*_{*A*4*T*2*DFFT*3}(*k, p, l*) data, where DBF angle measurement or DML angle measurement algorithm, etc. may be used, which is not limited herein.

### VI. Target parsing

The range, velocity, and angle (azimuth, pitch) of the target are obtained by multiplying the range bin generated by the processing of the CFAR and DOA angle measurement module, velocity bin and angle bin generated after 1T4T matching by corresponding scaling factors. In addition, a signal to noise ratio (SNR) is estimated and a radar cross section (RCS) is calculated, and the valid flag of target is stored in a structure variable targetListA of a targetList structure.

In some embodiments, in order to achieve the velocity ambiguity resolution to expand a velocity measurement range, it is also possible to use the first detection signal as the A wave and the second detection signal as the B wave, to perform the velocity ambiguity resolution based on the first echo signal and the second echo signal generated by the first detection signal and the second detection signal. That is, the target parsed data targetListA and targetListB obtained based on both the first echo signal and the second echo signal alternately perform velocity resolution. Herein, the specific manner of velocity ambiguity resolution may adopt any method in the existing technologies, which is not limited here. It should be understood that waveform parameters of the first detection signal and the second detection signal in the A-wave or B-wave are not the same, and a period of the second detection signal may be set as a A-wave period, and a period of the first detection signal may be set as a B-wave period. That is, the second detection signal may be used as both the 1T-wave and the A-wave, and the first detection signal may be used as both the 4T-wave and the B-wave, so that the two waveforms may be used for both 1T4T matching and AB waves velocity ambiguity resolution.

It should be noted that not only the first detection signal may be used as the A wave and the second detection signal as the B wave, but also the second detection signal may be used as the A wave and the first detection signal as the B wave, which will not be described here.

It should also be noted that in some cases, the *L_{A}* described above indicates a number of physical channels.

It should also be noted that in some cases, the target position adjustment among the receive channels refers to the target position adjustment among the virtual receive channels.

In some cases, alternatively performing the velocity resolution with the data targetListA and targetListB may be implemented as follows.

Assuming that a previous frame (history frame) is the A-wave and a result of the velocity ambiguity resolution processing is targetListA, a current frame is the B-wave and the target parsed frame is targetListB, the result of the history frame (targetListA) is used to perform the velocity ambiguity resolution on the current frame (targetListB).

Firstly, assuming that a processing time of the A-wave is: *T_{A} = T*_{*A*1}*_{T} + T*_{*A*4*T*}, and a processing time of the B-wave is: *T_{B} = T*_{*B*1}*_{T} + T*_{*B*4*T*}, a range prediction of the successful AB matching points of the history frame is performed and a related range in targetListA is updated, i.e.: ${R}_{A} = {R}_{A}^{′} + {V}_{A} ∗ {T}_{A}$;
where, *R_{A}* is a range after prediction, ${R}_{A}^{′}$ is a range before prediction, and *V_{A}* is a target velocity after the velocity ambiguity resolution.
A. Then a first matching processing based on the history frame is performed as follows. According to whether the matching between the A wave and the B wave is successful, points in the targetListA may be divided into {targetListA_S (successful), targetListA_U (failed)}; similarly, points in the targetListB may be divided into {targetListB_S (successful), targetListB _U (failed)}. A matching point for each target point in the targetListA_S is searched in the targetListB_U. If the two match, then a success mark of the matching and velocity in the targetListA_S, targetListB_U are updated, otherwise a failure mark is updated. Whether the two match is determined according to the following conditions:
   $\left|{R}_{A}-{R}_{B}\right| < TH {1}_{R} ;$
   $\left|mod\left(V{2}_{A},{V}_{maxB}\right)-V{1}_{B}\right| < TH {1}_{V} ;$
   $\left|{A}_{A}-{A}_{B}\right| < {TH}_{1 A} ;$
   where, *TH*1*_{R}*, *TH*1*_{V}*, *TH*1*_{A}* are empirical values of a range threshold, a velocity threshold and an angle threshold, respectively; *V_{maxB}* is a maximum unambiguous velocity measurement value when performing FFT in velocity gate on the B wave.
B. a second matching processing based on the history frame is performed as follows. After the previous operation, according to whether the matching between the A wave and the B wave is successful, the points in targetListA may be divided into {targetListA_S (successful), targetListA_U (failed)}; similarly, the points in targetListB may be divided into {targetListB_S (successful), {targetListB_U (failed)}. A matching point for each target point in targetListA_U is searched in targetListB_U. If the two match, then the success mark of the matching and velocity in targetListA_U and targetListB_U are updated, otherwise the failure mark is updated. Whether the two match is determined according to the following conditions:
   $\left|{R}_{A}-{R}_{B}\right| < TH {2}_{R} ;$
   $\left|mod\left(V{1}_{A}+q∗{V}_{maxA},{V}_{maxB}\right)-V{1}_{B}\right| < TH {2}_{V} ;$
   $\left|{A}_{A}-{A}_{B}\right| < TH {2}_{A} ;$
   where, *TH2_{R}*, *TH*2*_{V}*, *TH*2*_{A}* are the empirical values of the range threshold, the velocity threshold, and the angle threshold, respectively. Compared to the threshold values in B), values of this group are larger; *V_{maxA}*, *V_{maxB}* are the maximum unambiguous velocity measurement values when performing FFT in velocity gate on the A wave and the B wave, respectively. q is a multiple of ambiguity resolution, and may be any value in {-1, 0, 1}.
C. a first matching processing based on the current frame is performed as follows. After the previous operation, according to whether the matching between the A wave and the B wave is successful, the points in targetListA may be divided into {targetListA_S (successful), targetListA_U (failed)}; similarly, the points in targetListB may be divided into {targetListB_S (successful) targetListB_U (failed)}. A matching point for each target point in targetListB_U is searched in targetListA_S. If the two match, the success mark of the matching and velocity in targetListB_U are updated, otherwise the failure mark is updated. Whether the two match is determined according to the following conditions:
   $\left|{R}_{A}-{R}_{B}\right| < TH {3}_{R} ;$
   $\left|mod\left(V{1}_{A}+q∗{V}_{maxA},{V}_{maxB}\right)-V{1}_{B}\right| < TH {3}_{V} ;$
   $\left|{A}_{A}-{A}_{B}\right| < TH {3}_{A} ;$
   where, *TH*3*_{R}*, *TH*3*_{V}*, *TH*3*_{A}* are the empirical values of the range threshold, the velocity threshold, and the angle threshold, respectively; *V_{maxA}*, *V_{maxB}* are maximum unambiguous velocity measurement value when performing FFT in velocity gate on the A-wave and the B-wave, respectively. q is a multiple of ambiguity resolution, and may be any value in {-1, 0, 1}.
D. a second matching processing based on the current frame is performed as follows. After the previous operation, according to whether the matching between the A wave and the B wave is successful, the points in the targetListB may be divided into {targetListB_S (successful), targetListB_U (failed)}. A matching point for each target point in targetListB_U is searched in targetListB_S. If the two match, the success mark of the matching and velocity in targetListB_U are updated, otherwise the failure mark is updated. Whether the two match is determined according to the following conditions:
   $\left|{R}_{BU}-{R}_{BS}\right| < TH {4}_{R} ;$
   $\left|\left.V{1}_{BU}+q∗{V}_{maxB}\right)-V{2}_{BS}\right| < TH {4}_{V} ;$
   $\left|{A}_{AU}-{A}_{BS}\right| < TH {4}_{A} ;$
   where, *TH*4*_{R}*, *TH*4*_{V}*, *TH*4*_{A}* are the empirical values of the range threshold, the velocity threshold, and the angle threshold, respectively; *V_{maxB}* is the maximum unambiguous velocity measurement value when performing FFT in velocity gate on the B wave. q is a multiple of ambiguity resolution, and may be any value in {-1, 0, 1}.

A claimed embodiment of the present disclosure provides a signal processing device including a transceiver and a processor. The transceiver includes multiple antennas. The transceiver is configured to transmit the first detection signal and/or the second detection signal as described in any of the above embodiments, and to receive the first echo signal and/or the second echo signal as described above. The signal processing device is configured to perform the method as described in any of the above embodiments.

A claimed embodiment of the present disclosure provides a radar, including a transceiver and a processor. The transceiver includes multiple antennas. The transceiver is configured to transmit the first detection signal and/or the second detection signal as described in any of the above embodiments, and to receive the first echo signal and/or the second echo signal as described above. The radar is configured to perform the method as described in any of the above embodiments.

An embodiment of the present disclosure provides a readable storage medium configured to store a computer program or instructions. The computer program or instructions, when read and executed by the radar, cause the radar to implement the method as described in any of the above embodiments.

An embodiment of the present disclosure provides a computer program product including computer readable instructions. The computer readable instructions, when read and executed by a radar, cause the radar to implement the method as described in any of the above embodiments.

An embodiment of the present disclosure provides a terminal including the radar as described above.
In some embodiments, the terminal includes a vehicle, a smart home device, or a smart robot, etc.

## Claims

1. A signal processing method, applied to a radar, wherein the radar comprises M transmit channels, **characterized in that**, the method comprises:
transmitting (S110), during a first transmit cycle, a first detection signal through the M transmit channels, wherein the first detection signal is an equally spaced Doppler-division-multiplexing signal;
transmitting (S120), during a second transmit cycle that is different from the first transmit cycle, a second detection signal through m1 transmit channels in the M transmit channels, wherein 1 ≤m1<M and M is an integer greater than 1; the second detection signal is a time-division-multiplexing signal; and
processing (S130) a first echo signal and a second echo signal to determine a correspondence between the first echo signal and the M transmit channels;
wherein the first echo signal and the second echo signal are signals generated after the first detection signal and the second detection signal are reflected by a target, respectively;
**characterised in that**
transmitting (S110) the first detection signal through the M transmit channels comprises:
transmitting the first detection signal with pulses phase-stepped by $\left(e-1\right) * \frac{2 ∗ π}{M}$ through an eth transmit channel in the M transmit channels, wherein e∈{1,2,3,...,M}.

2. The signal processing method according to claim 1, wherein processing (S130) the first echo signal and the second echo signal to determine the correspondence between the first echo signal and the M transmit channels comprises:
performing a first processing on the first echo signal to obtain a first target data;
performing a second processing on the second echo signal to obtain a second target data;
performing a matching processing on the first target data and the second target data, and
determining the correspondence between the first echo signal and the M transmit channels based on a matching result.

3. The signal processing method according to claim 2, wherein the first target data comprises I*_{AMT}* target point data *T_{AMT}*(*i*) and the second target data comprises J_{*Am*1*T*} target point data *T*_{*Am*1*T*}(j)*,* wherein *i* ∈ {1, ... , I*_{AMT}*}, j∈ {1, ..., *J*_{*Am*1*T*}}, and both I*_{AMT}* and J_{*Am*1*T*} are positive integers;
performing the matching processing on the first target data and the second target data comprises:
for each of the J_{*Am*1*T*} target point data *T*_{*Am*1*T*}(j)*,* searching for a corresponding target point data among the I*_{AMT}* target point data *T_{AMT}*(*i*)*.*

4. The signal processing method according to claim 3, wherein the target point data *T_{AMT}*(*i*) comprises a range unit data *k_{AMT}*(*i*) and a velocity unit data *P_{AMT}*(*i*) corresponding to the target, and the target point data *T*_{*Am*1*T*}(j) comprises a range unit data *k*_{*Am*1*T*}(*j*) and a velocity unit data *p*_{*Am*1*T*}(*j*) corresponding to the target;
searching for the respective one of the target point data *T_{AMT}*(*i*) corresponding to each of the target point data *T*_{*Am*1*T*}(j) among I*_{AMT}* of the target point data *T_{AMT}*(*i*) respectively, comprises:
determining a first weight value *W_{R}*(*i, j, q*)*,* a second weight value *W_{V}*(*i, j, q*)*,* and a third weight value *W_{RV}*(*i, j, q*) according to the following formulas, respectively: ${W}_{R} \left(i, j, q\right) = \left|{k}_{A M T}\left(i\right)-{k}_{Am 1 T}\left(j\right)\right|$ ${W}_{V} \left(i, j, q\right) = \left|\left({P}_{AMT}\left(i\right)+q\frac{{p}_{A}}{M}\right)-{p}_{Am 1 T}\left(j\right)\right|$ ${W}_{RV} \left(i, j, q\right) = \partial ⋅ {W}_{R} \left(i, j, q\right) + β ⋅ {W}_{V} \left(i, j, q\right)$
wherein ∂ and *β* are predetermined coefficients corresponding to the first weight value *W_{R}*(*i, j, q*) and the second weight value *W_{V}*(*i, j, q*)*,* respectively, *p_{A}* is a number of FFT points in a velocity gate, and q denotes a qth transmit channel corresponding to the target point data *T_{AMT}*(*i*) to which the range unit data *k*_{*A*M*T*}(*i*) and the velocity unit data *P_{AMT}*(*i*) belong, among the M transmit channels; and
the first weight value *W_{R}*(*i, j, q*), the second weight value *W_{V}*(*i, j, q*)*,* and the third weight value *W_{RV}*(*i, j, q*) correspond to predetermined decision thresholds *TH_{R}*, *TH_{V}, Wₘᵢₙ*(*i*), respectively; whether the target point data *T*_{*A*M*T*}(*i*) matches with the target point data *T*_{*Am*1*T*}(*j*) is determined according to the following conditions: ${W}_{R} \left(i, j, q\right) < {TH}_{R} , {W}_{V} \left(i, j, q\right) < {TH}_{V} , {W}_{RV} \left(i, j, q\right) < {W}_{min} \left(i\right)$
in response to the conditions satisfied, it is determined that the target point data *T*_{*A*M*T*}(*i*) matches with the corresponding target point data *T*_{*Am*1*T*}(*j*); or
in response to the conditions not satisfied, it is determined that the target point data *T*_{*A*M*T*}(*i*) does not match with the corresponding target point data *T*_{*Am*1*T*}(*j*).

5. The signal processing method according to claim 3 or claim 4, wherein after searching for the respective one of the target point data *T_{AMT}*(*i*) corresponding to each of the target point data *T*_{*Am*1*T*}(j) among I*_{AMT}* of the target point data *T_{AMT}*(*i*) respectively, determining the correspondence between the first echo signal and the M transmit channels based on the matching result, comprises:
determining, based on a correspondence between the target point data *T_{AMT}*(i) and the target point data *T*_{*Am*1*T*}(j)*,* a transmit channel corresponding to the m1 transmit channels in the M transmit channels; and
determining, based on the transmit channel corresponding to the m1 transmit channels in the M transmit channels, the correspondence between the first echo signal and the M transmit channels;
optionally, wherein the method further comprises: after determining the correspondence between the first echo signal and the M transmit channels based on the matching result, correcting the first target data according to the correspondence between the first echo signal and the M transmit channels to obtain a third target data;
optionally, wherein m1 is equal to 1 and the m1 transmit channels for transmitting the second detection signal comprise a first transmit channel;
determining, based on the correspondence between the target point data *T_{AMT}*(i) and the target point data *T*_{*Am*1*T*}(j)*,* the transmit channel corresponding to the m1 transmit channel in the M transmit channels, comprises:
determining, based on the correspondence between the target point data *T_{AMT}*(i) and the target point data *T*_{*Am*1*T*}(j), a second transmit channel corresponding to the first transmit channel in the M transmit channels; and
correcting the first target data according to the correspondence between the first echo signal and the M transmit channels to obtain the third target data, comprises:
correcting the first target data according to a position of the second transmit channel in the M transmit channels to obtain the third target data;

6. The signal processing method according to claim 5, wherein the radar comprises L physical receive channels; the method further comprises:
performing a channel separation on the third target data to obtain target data corresponding to M*L virtual receive channels; and
performing an angle measurement on the target based on the target data corresponding to the M*L virtual receive channels;
optionally, wherein performing the angle measurement on the target comprises:
performing the angle measurement on the target by means of a Digital Beam Forming (DBF) algorithm or a Deterministic Maximum Likelihood (DML) algorithm.

7. The signal processing method according to any one of claims 2 to 6, wherein performing the first processing on the first echo signal to obtain the first target data comprises:
performing a channel separation on the first echo signal and obtaining the first target data based on a channel separation result.

8. The signal processing method according to any one of claims 2 to 6, wherein the first processing and/or the second processing comprises a constant false alarm rate, CFAR, detector;
optionally, wherein one or both of the first processing and the second processing comprises at least one of the following processing:
an analog-to-digital conversion, ADC, a 1D-discrete Fourier transform,1D-FFT, a 2D-discrete Fourier transform, 2D-FFT, and a non-coherent integration, NCI.

9. The signal processing method according to any one of claims 2 to 6, wherein the first detection signal or the second detection signal is a frequency modulated continuous wave (FMCW) signal.

10. The signal processing method according to any one of claims 1 to 9, wherein the method further comprises:
performing a velocity ambiguity resolution alternately based on the first echo signal and the second echo signal.

11. A signal processing device, comprising a transceiver and a processor, wherein the transceiver comprises multiple antennas;
wherein the signal processing device is configured to implement the method according to any one of claims 1 to 10.

12. A radar, comprising a transceiver and a processor, wherein the transceiver comprises multiple antennas;
wherein the radar is configured to implement the method according to any one of claims 1 to 10.

13. A readable storage medium configured to store a computer program or instructions, which, when executed by the radar of claim 12, causes the radar to implement the method according to any one of claims 1 to 10.

14. A computer program product comprising computer readable instructions, when read and executed by the radar of claim 12, causes the radar to implement the method according to any one of claims 1 to 10.

15. A terminal, comprising the radar as claimed in claim 12;
optionally, wherein the terminal comprises a vehicle, a smart home device or a smart robot.

## Patentansprüche

1. Signalverarbeitungsverfahren, angewandt auf ein Radar, wobei das Radar M Sendekanäle umfasst, **dadurch gekennzeichnet, dass** das Verfahren umfasst:
Übertragen (S110), während eines ersten Sendezyklus, eines ersten Detektionssignals über die M Sendekanäle, wobei das erste Detektionssignal ein gleichmäßig beabstandetes Doppler-Division-Multiplexing-Signal ist;
Übertragen (S120), während eines zweiten Sendezyklus, der sich von dem ersten Sendezyklus unterscheidet, eines zweiten Detektionssignals über m1 Sendekanäle der M Sendekanäle, wobei 1≤m1<M und M eine ganze Zahl größer als 1 ist; wobei das zweite Detektionssignal ein Zeit-Division-Multiplexing-Signal ist; und
Verarbeiten (S130) eines ersten Echosignals und eines zweiten Echosignals, um eine Zuordnung zwischen dem ersten Echosignal und den M Sendekanälen zu bestimmen;
wobei das erste Echosignal und das zweite Echosignal Signale sind, die erzeugt werden, nachdem das erste Detektionssignal bzw. das zweite Detektionssignal von einem Ziel reflektiert wurden;
**dadurch gekennzeichnet, dass** das Übertragen (S110) des ersten Detektionssignals über die M Sendekanäle umfasst:
Übertragen des ersten Detektionssignals mit Impulsen, die phasenschrittweise um (e-1)*2*π/M verschoben sind, über einen e-ten Sendekanal der M Sendekanäle, wobei e∈{1,2,3,...,M}.

2. Signalverarbeitungsverfahren nach Anspruch 1, wobei das Verarbeiten (S130) des ersten Echosignals und des zweiten Echosignals, um die Zuordnung zwischen dem ersten Echosignal und den M Sendekanälen zu bestimmen, umfasst:
Durchführen einer ersten Verarbeitung an dem ersten Echosignal, um erste Zieldaten zu erhalten;
Durchführen einer zweiten Verarbeitung an dem zweiten Echosignal, um zweite Zieldaten zu erhalten;
Durchführen einer Abgleichverarbeitung an den ersten Zieldaten und den zweiten Zieldaten, und
Bestimmen der Zuordnung zwischen dem ersten Echosignal und den M Sendekanälen auf der Grundlage eines Abgleichergebnisses.

3. Signalverarbeitungsverfahren nach Anspruch 2, wobei die ersten Zieldaten I_{AMT} Zielpunktdaten T_{AMT}(i) umfassen und die zweiten Zieldaten J_{Am1T} Zielpunktdaten T_{Am1T}(j) umfassen, wobei i∈{1,...,I_{AMT}}, j∈{1,...,J_{Am1T}}, und sowohl I_{AMT} als auch J_{Am1T} positive ganze Zahlen sind;
das Durchführen der Abgleichverarbeitung an den ersten Zieldaten und den zweiten Zieldaten umfasst:
für jede der J_{Am1T} Zielpunktdaten T_{Am1T}(j), Suchen nach entsprechenden Zielpunktdaten unter den I_{AMT} Zielpunktdaten T_{AMT}(i).

4. Signalverarbeitungsverfahren nach Anspruch 3, wobei die Zielpunktdaten T_{AMT}(i) Entfernungseinheitsdaten k_{AMT}(i) und Geschwindigkeitseinheitsdaten P_{AMT}(i) umfassen, die dem Ziel entsprechen, und die Zielpunktdaten T_{Am1T}(j) Entfernungseinheitsdaten k_{Am1T}(j) und Geschwindigkeitseinheitsdaten p_{Am1T}(j) umfassen, die dem Ziel entsprechen;
das Suchen nach der jeweiligen der Zielpunktdaten T_{AMT}(i), die jeder der Zielpunktdaten T_{Am1T}(j) entsprechen, unter I_{AMT} der Zielpunktdaten T_{AMT}(i) jeweils, umfasst:
Bestimmen eines ersten Gewichtswerts W_{R}(i,j,q), eines zweiten Gewichtswerts W_{V}(i,j,q) und eines dritten Gewichtswerts W_{RV}(i,j,q) gemäß den folgenden Formeln jeweils: ${W}_{R} \left(i, j, q\right) = \left|{k}_{AMT}\left(i\right)-{k}_{Am 1 T}\left(j\right)\right|$ ${W}_{V} \left(i, j, q\right) = \left|\left({P}_{AMT}\left(i\right)+q {p}_{A}/M\right)-{p}_{Am 1 T}\left(j\right)\right|$ ${W}_{RV} \left(i, j, q\right) = \partial ⋅ {W}_{R} \left(i, j, q\right) + β ⋅ {W}_{V} \left(i, j, q\right)$
wobei ∂ und β vorbestimmte Koeffizienten sind, die dem ersten Gewichtswert W_{R}(i,j,q) bzw. dem zweiten Gewichtswert W_{V}(i,j,q) entsprechen, p_{A} eine Anzahl von FFT-Punkten in einem Geschwindigkeitstor ist, und q einen q-ten Sendekanal bezeichnet, der den Zielpunktdaten T_{AMT}(i) entspricht, zu denen die Entfernungseinheitsdaten k_{AMT}(i) und die Geschwindigkeitseinheitsdaten P_{AMT}(i) gehören, unter den M Sendekanälen; und
der erste Gewichtswert W_{R}(i,j,q), der zweite Gewichtswert W_{V}(i,j,q) und der dritte Gewichtswert W_{RV}(i,j,q) vorbestimmten Entscheidungsschwellen TH_{R}, TH_{V}, Wₘᵢₙ(i) jeweils entsprechen; wobei, ob die Zielpunktdaten T_{AMT}(i) mit den Zielpunktdaten T_{Am1T}(j) übereinstimmen, gemäß den folgenden Bedingungen bestimmt wird: ${W}_{R} \left(i, j, q\right) < {TH}_{R} , {W}_{V} \left(i, j, q\right) < {TH}_{V} , {W}_{RV} \left(i, j, q\right) < {W}_{min} \left(i\right)$
als Reaktion darauf, dass die Bedingungen erfüllt sind, wird bestimmt, dass die Zielpunktdaten T_{AMT}(i) mit den entsprechenden Zielpunktdaten T_{Am1T}(j) übereinstimmen; oder
als Reaktion darauf, dass die Bedingungen nicht erfüllt sind, wird bestimmt, dass die Zielpunktdaten T_{AMT}(i) nicht mit den entsprechenden Zielpunktdaten T_{Am1T}(j) übereinstimmen.

5. Signalverarbeitungsverfahren nach Anspruch 3 oder Anspruch 4, wobei nach dem Suchen nach der jeweiligen der Zielpunktdaten T_{AMT}(i), die jeder der Zielpunktdaten T_{Am1T}(j) entsprechen, unter I_{AMT} der Zielpunktdaten T_{AMT}(i) jeweils, das Bestimmen der Zuordnung zwischen dem ersten Echosignal und den M Sendekanälen auf der Grundlage des Abgleichergebnisses umfasst:
Bestimmen, auf der Grundlage einer Zuordnung zwischen den Zielpunktdaten T_{AMT}(i) und den Zielpunktdaten T_{Am1T}(j), eines Sendekanals, der den m1 Sendekanälen der M Sendekanäle entspricht; und
Bestimmen, auf der Grundlage des Sendekanals, der den m1 Sendekanälen der M Sendekanäle entspricht, der Zuordnung zwischen dem ersten Echosignal und den M Sendekanälen;
optional, wobei das Verfahren ferner umfasst: nach dem Bestimmen der Zuordnung zwischen dem ersten Echosignal und den M Sendekanälen auf der Grundlage des Abgleichergebnisses, Korrigieren der ersten Zieldaten gemäß der Zuordnung zwischen dem ersten Echosignal und den M Sendekanälen, um dritte Zieldaten zu erhalten;
optional, wobei m1 gleich 1 ist und die m1 Sendekanäle zum Übertragen des zweiten Detektionssignals einen ersten Sendekanal umfassen;
das Bestimmen, auf der Grundlage der Zuordnung zwischen den Zielpunktdaten T_{AMT}(i) und den Zielpunktdaten T_{Am1T}(j), des Sendekanals, der dem m1 Sendekanal der M Sendekanäle entspricht, umfasst:
Bestimmen, auf der Grundlage der Zuordnung zwischen den Zielpunktdaten T_{AMT}(i) und den Zielpunktdaten T_{Am1T}(j), eines zweiten Sendekanals, der dem ersten Sendekanal der M Sendekanäle entspricht; und
das Korrigieren der ersten Zieldaten gemäß der Zuordnung zwischen dem ersten Echosignal und den M Sendekanälen, um die dritten Zieldaten zu erhalten, umfasst:
Korrigieren der ersten Zieldaten gemäß einer Position des zweiten Sendekanals in den M Sendekanälen, um die dritten Zieldaten zu erhalten.

6. Signalverarbeitungsverfahren nach Anspruch 5, wobei das Radar L physische Empfangskanäle umfasst; wobei das Verfahren ferner umfasst:
Durchführen einer Kanaltrennung an den dritten Zieldaten, um Zieldaten zu erhalten, die M*L virtuellen Empfangskanälen entsprechen; und
Durchführen einer Winkelmessung an dem Ziel auf der Grundlage der Zieldaten, die den M*L virtuellen Empfangskanälen entsprechen;
optional, wobei das Durchführen der Winkelmessung an dem Ziel umfasst:
Durchführen der Winkelmessung an dem Ziel mittels eines Digital-Beam-Forming-(DBF)-Algorithmus oder eines Deterministic-Maximum-Likelihood-(DML)-Algorithmus.

7. Signalverarbeitungsverfahren nach einem der Ansprüche 2 bis 6, wobei das Durchführen der ersten Verarbeitung an dem ersten Echosignal, um die ersten Zieldaten zu erhalten, umfasst:
Durchführen einer Kanaltrennung an dem ersten Echosignal und Erhalten der ersten Zieldaten auf der Grundlage eines Kanaltrennungsergebnisses.

8. Signalverarbeitungsverfahren nach einem der Ansprüche 2 bis 6, wobei die erste Verarbeitung und/oder die zweite Verarbeitung einen Detektor mit konstanter Falschalarmrate, CFAR, umfasst;
optional, wobei eine oder beide der ersten Verarbeitung und der zweiten Verarbeitung mindestens eine der folgenden Verarbeitungen umfasst:
eine Analog-Digital-Umsetzung, ADC, eine 1D-diskrete Fourier-Transformation, 1D-FFT, eine 2D-diskrete Fourier-Transformation, 2D-FFT, und eine nicht-kohärente Integration, NCI.

9. Signalverarbeitungsverfahren nach einem der Ansprüche 2 bis 6, wobei das erste Detektionssignal oder das zweite Detektionssignal ein frequenzmoduliertes Dauerstrichsignal (FMCW-Signal) ist.

10. Signalverarbeitungsverfahren nach einem der Ansprüche 1 bis 9, wobei das Verfahren ferner umfasst:
Durchführen einer Auflösung der Geschwindigkeitsmehrdeutigkeit abwechselnd auf der Grundlage des ersten Echosignals und des zweiten Echosignals.

11. Signalverarbeitungsvorrichtung, umfassend einen Sende-Empfänger und einen Prozessor, wobei der Sende-Empfänger mehrere Antennen umfasst;
wobei die Signalverarbeitungsvorrichtung dazu ausgelegt ist, das Verfahren nach einem der Ansprüche 1 bis 10 durchzuführen.

12. Radar, umfassend einen Sende-Empfänger und einen Prozessor, wobei der Sende-Empfänger mehrere Antennen umfasst;
wobei das Radar dazu ausgelegt ist, das Verfahren nach einem der Ansprüche 1 bis 10 durchzuführen.

13. Lesbares Speichermedium, das dazu ausgelegt ist, ein Computerprogramm oder Anweisungen zu speichern, die, wenn sie durch das Radar nach Anspruch 12 ausgeführt werden, das Radar veranlassen, das Verfahren nach einem der Ansprüche 1 bis 10 durchzuführen.

14. Computerprogrammprodukt, das computerlesbare Anweisungen umfasst, die, wenn sie durch das Radar nach Anspruch 12 gelesen und ausgeführt werden, das Radar veranlassen, das Verfahren nach einem der Ansprüche 1 bis 10 durchzuführen.

15. Endgerät, umfassend das Radar wie in Anspruch 12 beansprucht;
optional, wobei das Endgerät ein Fahrzeug, ein Smart-Home-Gerät oder einen intelligenten Roboter umfasst.

## Revendications

1. Procédé de traitement du signal, appliqué à un radar, le radar comprenant M canaux d'émission, **caractérisé en ce que** le procédé comprend :
l'émission (S110), pendant un premier cycle d'émission, d'un premier signal de détection par l'intermédiaire des M canaux d'émission, le premier signal de détection étant un signal de multiplexage par répartition Doppler à espacement égal ;
l'émission (S120), pendant un deuxième cycle d'émission qui est différent du premier cycle d'émission, d'un deuxième signal de détection par l'intermédiaire de m1 canaux d'émission parmi les M canaux d'émission, où 1≤m1<M et M est un entier supérieur à 1 ; le deuxième signal de détection étant un signal de multiplexage par répartition dans le temps ; et
le traitement (S130) d'un premier signal d'écho et d'un deuxième signal d'écho pour déterminer une correspondance entre le premier signal d'écho et les M canaux d'émission ;
dans lequel le premier signal d'écho et le deuxième signal d'écho sont des signaux générés après que le premier signal de détection et le deuxième signal de détection ont été réfléchis par une cible, respectivement ;
**caractérisé en ce que** l'émission (S110) du premier signal de détection par l'intermédiaire des M canaux d'émission comprend :
l'émission du premier signal de détection avec des impulsions déphasées par pas de (e-1)*2*π/M par l'intermédiaire d'un e-ième canal d'émission parmi les M canaux d'émission, où e∈{1,2,3,...,M}.

2. Procédé de traitement du signal selon la revendication 1, dans lequel le traitement (S130) du premier signal d'écho et du deuxième signal d'écho pour déterminer la correspondance entre le premier signal d'écho et les M canaux d'émission comprend :
la réalisation d'un premier traitement sur le premier signal d'écho pour obtenir une première donnée de cible ;
la réalisation d'un deuxième traitement sur le deuxième signal d'écho pour obtenir une deuxième donnée de cible ;
la réalisation d'un traitement de mise en correspondance sur la première donnée de cible et la deuxième donnée de cible, et
la détermination de la correspondance entre le premier signal d'écho et les M canaux d'émission sur la base d'un résultat de mise en correspondance.

3. Procédé de traitement du signal selon la revendication 2, dans lequel la première donnée de cible comprend I_{AMT} données de point de cible T_{AMT}(i) et la deuxième donnée de cible comprend J_{Am1T} données de point de cible T_{Am1T}(j), où i∈{1,...,I_{AMT}}, j∈{1,...,J_{Am1T}}, et I_{AMT} et J_{Am1T} sont tous deux des entiers positifs ;
la réalisation du traitement de mise en correspondance sur la première donnée de cible et la deuxième donnée de cible comprend :
pour chacune des J_{Am1T} données de point de cible T_{Am1T}(j), la recherche d'une donnée de point de cible correspondante parmi les I_{AMT} données de point de cible T_{AMT}(i).

4. Procédé de traitement du signal selon la revendication 3, dans lequel la donnée de point de cible T_{AMT}(i) comprend une donnée d'unité de distance k_{AMT}(i) et une donnée d'unité de vitesse P_{AMT}(i) correspondant à la cible, et la donnée de point de cible T_{Am1T}(j) comprend une donnée d'unité de distance k_{Am1T}(j) et une donnée d'unité de vitesse p_{Am1T}(j) correspondant à la cible ;
la recherche de celle respective des données de point de cible T_{AMT}(i) correspondant à chacune des données de point de cible T_{Am1T}(j) parmi I_{AMT} des données de point de cible T_{AMT}(i) respectivement, comprend :
la détermination d'une première valeur de pondération W_{R}(i,j,q), d'une deuxième valeur de pondération W_{V}(i,j,q) et d'une troisième valeur de pondération W_{RV}(i,j,q) selon les formules suivantes, respectivement : ${W}_{R} \left(i, j, q\right) = \left|{k}_{AMT}\left(i\right)-{k}_{Am 1 T}\left(j\right)\right|$ ${W}_{V} \left(i, j, q\right) = \left|\left({P}_{AMT}\left(i\right)+q {p}_{A}/M\right)-{p}_{Am 1 T}\left(j\right)\right|$ ${W}_{RV} \left(i, j, q\right) = \partial ⋅ {W}_{R} \left(i, j, q\right) + β ⋅ {W}_{V} \left(i, j, q\right)$
dans lequel ∂ et β sont des coefficients prédéterminés correspondant à la première valeur de pondération W_{R}(i,j,q) et à la deuxième valeur de pondération W_{V}(i,j,q), respectivement, p_{A} est un nombre de points de FFT dans une porte de vitesse, et q désigne un q-ième canal d'émission correspondant à la donnée de point de cible T_{AMT}(i) à laquelle la donnée d'unité de distance k_{AMT}(i) et la donnée d'unité de vitesse P_{AMT}(i) appartiennent, parmi les M canaux d'émission ; et
la première valeur de pondération W_{R}(i,j,q), la deuxième valeur de pondération W_{V}(i,j,q) et la troisième valeur de pondération W_{RV}(i,j,q) correspondent à des seuils de décision prédéterminés TH_{R}, TH_{V}, Wₘᵢₙ(i), respectivement ; le fait de savoir si la donnée de point de cible T_{AMT}(i) correspond à la donnée de point de cible T_{Am1T}(j) est déterminé selon les conditions suivantes : ${W}_{R} \left(i, j, q\right) < {TH}_{R} , {W}_{V} \left(i, j, q\right) < {TH}_{V} , {W}_{RV} \left(i, j, q\right) < {W}_{min} \left(i\right)$
en réponse aux conditions satisfaites, il est déterminé que la donnée de point de cible T_{AMT}(i) correspond à la donnée de point de cible correspondante T_{Am1T}(j) ; ou
en réponse aux conditions non satisfaites, il est déterminé que la donnée de point de cible T_{AMT}(i) ne correspond pas à la donnée de point de cible correspondante T_{Am1T}(j).

5. Procédé de traitement du signal selon la revendication 3 ou la revendication 4, dans lequel, après la recherche de celle respective des données de point de cible T_{AMT}(i) correspondant à chacune des données de point de cible T_{Am1T}(j) parmi I_{AMT} des données de point de cible T_{AMT}(i) respectivement, la détermination de la correspondance entre le premier signal d'écho et les M canaux d'émission sur la base du résultat de mise en correspondance, comprend :
la détermination, sur la base d'une correspondance entre la donnée de point de cible T_{AMT}(i) et la donnée de point de cible T_{Am1T}(j), d'un canal d'émission correspondant aux m1 canaux d'émission parmi les M canaux d'émission ; et
la détermination, sur la base du canal d'émission correspondant aux m1 canaux d'émission parmi les M canaux d'émission, de la correspondance entre le premier signal d'écho et les M canaux d'émission ;
facultativement, dans lequel le procédé comprend en outre : après la détermination de la correspondance entre le premier signal d'écho et les M canaux d'émission sur la base du résultat de mise en correspondance, la correction de la première donnée de cible en fonction de la correspondance entre le premier signal d'écho et les M canaux d'émission pour obtenir une troisième donnée de cible ;
facultativement, dans lequel m1 est égal à 1 et les m1 canaux d'émission pour émettre le deuxième signal de détection comprennent un premier canal d'émission ;
la détermination, sur la base de la correspondance entre la donnée de point de cible T_{AMT}(i) et la donnée de point de cible T_{Am1T}(j), du canal d'émission correspondant au m1 canal d'émission parmi les M canaux d'émission, comprend :
la détermination, sur la base de la correspondance entre la donnée de point de cible T_{AMT}(i) et la donnée de point de cible T_{Am1T}(j), d'un deuxième canal d'émission correspondant au premier canal d'émission parmi les M canaux d'émission ; et
la correction de la première donnée de cible en fonction de la correspondance entre le premier signal d'écho et les M canaux d'émission pour obtenir la troisième donnée de cible, comprend :
la correction de la première donnée de cible en fonction d'une position du deuxième canal d'émission parmi les M canaux d'émission pour obtenir la troisième donnée de cible.

6. Procédé de traitement du signal selon la revendication 5, dans lequel le radar comprend L canaux de réception physiques ; le procédé comprend en outre :
la réalisation d'une séparation de canaux sur la troisième donnée de cible pour obtenir des données de cible correspondant à M*L canaux de réception virtuels ; et
la réalisation d'une mesure d'angle sur la cible sur la base des données de cible correspondant aux M*L canaux de réception virtuels ;
facultativement, dans lequel la réalisation de la mesure d'angle sur la cible comprend :
la réalisation de la mesure d'angle sur la cible au moyen d'un algorithme de formation de faisceau numérique (DBF) ou d'un algorithme de maximum de vraisemblance déterministe (DML).

7. Procédé de traitement du signal selon l'une quelconque des revendications 2 à 6, dans lequel la réalisation du premier traitement sur le premier signal d'écho pour obtenir la première donnée de cible comprend :
la réalisation d'une séparation de canaux sur le premier signal d'écho et l'obtention de la première donnée de cible sur la base d'un résultat de séparation de canaux.

8. Procédé de traitement du signal selon l'une quelconque des revendications 2 à 6, dans lequel le premier traitement et/ou le deuxième traitement comprend un détecteur à taux de fausse alarme constant, CFAR ;
facultativement, dans lequel l'un ou les deux du premier traitement et du deuxième traitement comprend au moins l'un des traitements suivants :
une conversion analogique-numérique, ADC, une transformée de Fourier discrète 1D, 1D-FFT, une transformée de Fourier discrète 2D, 2D-FFT, et une intégration non cohérente, NCI.

9. Procédé de traitement du signal selon l'une quelconque des revendications 2 à 6, dans lequel le premier signal de détection ou le deuxième signal de détection est un signal à onde continue modulée en fréquence (FMCW).

10. Procédé de traitement du signal selon l'une quelconque des revendications 1 à 9, dans lequel le procédé comprend en outre :
la réalisation d'une résolution d'ambiguïté de vitesse en alternance sur la base du premier signal d'écho et du deuxième signal d'écho.

11. Dispositif de traitement du signal, comprenant un émetteur-récepteur et un processeur, l'émetteur-récepteur comprenant plusieurs antennes ;
dans lequel le dispositif de traitement du signal est configuré pour mettre en œuvre le procédé selon l'une quelconque des revendications 1 à 10.

12. Radar, comprenant un émetteur-récepteur et un processeur, l'émetteur-récepteur comprenant plusieurs antennes ;
dans lequel le radar est configuré pour mettre en œuvre le procédé selon l'une quelconque des revendications 1 à 10.

13. Support de stockage lisible configuré pour stocker un programme informatique ou des instructions qui, lorsqu'ils sont exécutés par le radar de la revendication 12, amènent le radar à mettre en œuvre le procédé selon l'une quelconque des revendications 1 à 10.

14. Produit programme d'ordinateur comprenant des instructions lisibles par ordinateur qui, lorsqu'elles sont lues et exécutées par le radar de la revendication 12, amènent le radar à mettre en œuvre le procédé selon l'une quelconque des revendications 1 à 10.

15. Terminal, comprenant le radar tel que revendiqué dans la revendication 12 ;
facultativement, dans lequel le terminal comprend un véhicule, un dispositif de maison intelligente ou un robot intelligent.
